(19) Europäisches Patentamt / European Patent Office / Office européen des brevets

(11) **EP 4 506 322 A1**

(12) **EUROPEAN PATENT APPLICATION**

(43) Date of publication:
**12.02.2025  Bulletin 2025/07**

(21) Application number: **23190431.9**

(22) Date of filing: **08.08.2023**

(51) International Patent Classification (IPC):
**C05D 9/02** (2006.01)   **C05G 5/27** (2020.01)
**C05G 5/30** (2020.01)

(52) Cooperative Patent Classification (CPC):
**C05G 5/30; C05D 9/02; C05G 5/27; C05G 5/38**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Bioweg UG
49610 Quakenbrück (DE)**

(72) Inventors:
• **Saldanha Da Silva, Tamaira Ines
49610 Quakenbrück (DE)**
• **Mittal, Anuj
49610 Quakenbrück (DE)**
• **Karuturi, Srinivas
49610 Quakenbrück (DE)**
• **Mahalwar, Prateek
49610 Quakenbrück (DE)**

(74) Representative: **Hertin und Partner
Rechts- und Patentanwälte PartG mbB
Kurfürstendamm 54/55
10707 Berlin (DE)**

(54) **ROBUST BIODEGRADABLE COATING FORMULATION CONTAINING ONE OR MORE MICRONUTRIENTS**

(57)   The invention relates to a biodegradable coating formulation for a fertilizer, said biodegradable coating formulation comprising an aqueous phase and an oil phase, the oil phase being dispersed in the aqueous phase and comprising a reclaimed material from a waste and/or side stream of a biologically based process, wherein micronutrient particles are suspended in the biodegradable coating formulation such as to form a suspo-emulsion. In further aspects, the invention preferably relates to a method of manufacturing the biodegradable coating formulation, a method of coating a granulate solid fertilizer with the biodegradable coating formulation and a coated granulate solid fertilizer.

**Description**

The invention preferably relates to a biodegradable coating formulation for a fertilizer, said biodegradable coating formulation comprising an aqueous phase and an oil phase, the oil phase being dispersed in the aqueous phase and comprising a reclaimed material from a waste and/or side stream of a biologically based process, wherein micronutrient particles are suspended in the biodegradable coating formulation such as to form a suspo-emulsion. In further aspects, the invention preferably relates to a method of manufacturing the biodegradable coating formulation, a method of coating a granulate solid fertilizer with the biodegradable coating formulation and a coated granulate solid fertilizer.

**BACKGROUND AND PRIOR ART**

The invention belongs to the technical field of agricultural materials, in particular to coating materials for granulate solid fertilizers which can be applied to soil.

Concerns regarding population growth over the last 50 years have led to an increase in the harvesting of high-yield crops such as grains. The intensive farming of such high-yield crops has however led to rapid deterioration of soil quality in agricultural regions and leads to reduced yield, in particular for major crops (for example, soybean and corn), increasing the demand for fertilizers. Traditional fertilizers contain so-called macronutrients such as nitrogen, phosphorus and potassium. These are generally required by all crops in significant amounts to maintain their health, longevity, and yield. However, crops also require trace elements found in the soil, typically constituting a dry content of no more than 0.01 % of soil. The consistent provision of such trace elements supports plant health and morphology. These trace elements are often referred to as micronutrients. The lack of micronutrients in a crop's environment can lead to deficiencies and disease, reducing the crop yield.

As a result of the trend towards more intensive farming practices, many soils have become deficient in micronutrients and provide a lowered yield, especially for the major crops, such as soybean and corn. For example, soils in India have been found to suffer from various levels of micronutrient deficiency which varies from region to region (Anand P. Gupta, Micronutrient status and fertilizer use scenario in India, Journal of Trace Elements in Medicine and Biology, Volume 18, Issue 4, 2005, Pages 325-331, ISSN 0946-672X). Agricultural soils were found in particular to have depleted levels of zinc, iron, copper, manganese and boron. The soils in Brazil, for example, are suffering from boron deficiency due to the high temperature reached in the fields and this deficiency decreases the yields.

In order to maintain high agricultural yields, techniques have been developed to supplement plants and/or soils with micronutrients. Among the known techniques are the application of low-solubility fertilizers, fertilizers with an external coating and nano-fertilizers (Mikula et al., Controlled release micronutrient fertilizers for precision agriculture - A review, Science of The Total Environment, Volume 712, 2020, 136365, ISSN 0048-9697). An existing challenge with the known techniques is the tendency for micronutrients to be rapidly released into the soil and leached into groundwater, reducing their availability to the plants. For example, rainwater has a tendency to rapidly dissolve fertilizers and their coatings and to wash any micronutrients into deeper layers of soil where they cannot be reached by plant roots. This greatly reduces the efficiency of such fertilizers and leads to contamination of soil and groundwater.

One method of counteracting the leaching of fertilizer micronutrients is to increase the amount or frequency of fertilizer application. This is however not only uneconomic but can contaminate groundwater. Over-fertilization can also increase salinity, acidity or substantially bring the composition of the soil out of balance. Where the fertilizers comprise non-biodegradable and/or petroleum-based components (especially polyethylene glycol carriers or dispersants based on acrylic acid), the risk of soil and groundwater contamination is higher. Petroleum-based additives have been found to remain in the soil and/or groundwater for at least five years without degradation. The use of plastics such as microplastics and plastic colorants presents additional environmental challenges.

In order to provide a slower or more controlled release of micro- and macronutrients into the soil, slow-release fertilizers (SRFs) and controlled-release fertilizers (CRFs) have been developed. Among these slow or controlled-release fertilizers, the coating of macronutrient fertilizer pellets with a slow-degrading micronutrient coating has been attempted (Mikula et al., Controlled release micronutrient fertilizers for precision agriculture - A review, Science of The Total Environment, Volume 712, 2020, 136365, ISSN 0048-9697). The coating can act as a physical or chemical barrier to slow the release and transport of the macronutrients into the soil, reducing the risk of leaching. A difficulty with applying such a coating is that either the coating process itself or the storage and application of the coated fertilizer pellets can damage and deteriorate the physical integrity of the coating and the pellets. For example, where coatings are formed as an aqueous solution of micronutrient-containing compounds, the coating process can cause an unwanted dissolution of macronutrients at the surface of the fertilizer pellets. This can cause pellets to stick together during storage and can reduce their mechanical stability, making them softer than required. Other issues arise when coatings are applied in solid form (e.g. as a powder) to fertilizer pellets having a dusty surface or when the aqueous coating solution dries, leaving only powder behind. The dustiness of the fertilizer is increased, reducing its stability during transport and when used in soil. The rough, dusty or flaky fertilizer surface can more easily be attacked by physical, chemical or biological elements in the soil.

Non-biodegradable petroleum-based polymers have been used in such coatings in order to slow the release of the fertilizer nutrients and/or reduce dustiness. These polymers, however, come with additional issues due to their toxicity and lack of biodegradability and can further deteriorate the soil quality and have phytotoxic effects on crop roots.

EP2958877B1 discloses an example of a micronutrient coating for fertilizer granules. The coating consists of a single-phase solid-in-oil suspension which is completely free of water. As an example, zinc oxide particles and a blue pigment were dispersed in rapeseed oil using a dispersant to form the coating. The produced coating was highly viscous, making it unsuitable for some methods of application to a fertilizer surface such as spraying. The coating is non-biodegradable due to the presence of polymeric dispersants including, for example, fatty acids, mono- and diglycerides, polymeric fatty acid derivatives such as Afcona 6226, Atlox LP1, Decal FD and others. Moreover, the blending process used to form a homogeneous suspension of solid micronutrient particles in oil relies on the solid micronutrient particles all being of the same type, having an approximately uniform size and density. The coating proposed by EP2958877B1 thus offers limited flexibility in its composition and remains in the soil for long periods of time.

There is therefore a need for an improved micronutrient coating, an improved method of manufacturing said micronutrient coating, an improved method of coating a solid fertilizer with a micronutrient coating and an improved coated granulate fertilizer. In particular, there is a need for a micronutrient coating which provides for mechanically and chemically stable coated granulate fertilizers which can be stored and distributed without the drawbacks of the state of the art. Further, there is a need for a micronutrient coating which supplies one or more micronutrients and adequately controls the release of macronutrients into the soil, without causing groundwater contamination or reducing soil quality in the short or long term.

**SUMMARY OF THE INVENTION**

It is an objective of the invention to provide an improved micronutrient coating formulation, an improved method of manufacturing said micronutrient coating, an improved method of coating fertilizer granules with a micronutrient coating and an improved coated granulate fertilizer which overcome the drawbacks of the state of the art. In particular it is an objective to provide a micronutrient coating formulation which provides mechanically and chemically stable coated granulate fertilizers that allow for an improved control of the release of a macronutrient into the soil, without causing groundwater contamination or reducing soil quality in the short or long term. It was a further objective of the invention to provide a micronutrient coating comprising biodegradable alternatives to petroleum-based components, whilst maintaining excellent mechanical and chemical properties.

The objective is achieved by the features of the independent claims. Preferred embodiments of the present invention are provided by the dependent claims.

In the first aspect, the invention relates to a biodegradable coating formulation for a fertilizer. The biodegradable coating formulation comprises an aqueous phase and an oil phase. The oil phase is dispersed in the aqueous phase and comprises a reclaimed material from a waste and/or side stream of a biologically based process. Micronutrient particles are suspended in the biodegradable coating formulation such as to form a suspo-emulsion.

The presence of both an aqueous and an oil phase in the biodegradable coating formulation allows said coating formulation to be both hydrophilic and hydrophobic. It can thus comprise a very flexible formulation with water-soluble, sparingly water-soluble and/or insoluble components in a stable suspo-emulsion. The oil phase provides excellent binding properties such that the micronutrient particles can be uniformly applied to the surface of a solid fertilizer material and provides dusting control for improved storage and application. The oil phase further improves the stability of the coating to provide a barrier between a fertilizer granule and the surrounding soil in which it is placed. As a result, the macro- or micronutrients of the coated fertilizer interact more slowly with surrounding soil or rainwater, such that a slow and controlled release of the macro- and micronutrients is achieved. This is particularly advantageous for reducing the frequency and amount of fertilization required on many soils, especially in difficult climate conditions with heavy rain or porous soils. At the same time, the risk of groundwater contamination due to fertilizer components being rapidly leached into the soil is reduced. Moreover, due to the slow and controlled release of macro- and micronutrients, the soil is not subject to sudden changes in its composition which disturb the micro-ecosystem. In particular, the region of soil immediately surrounding plant roots (the "rhizosphere") is a micro-ecosystem comprising a delicate balance of plant secretions and symbiotic bacteria which can determine the success of a crop. The slow release of micro- and macronutrients into the soil allows the balance of chemicals and microorganisms surrounding the plant root to be upheld, maintaining the desired yield and plant health.

Dispersing the oil phase in the aqueous phase to form the suspo-emulsion forms a surprisingly homogeneous and stable coating formulation which could be stored for several weeks without any significant change, e.g. greater than +/-20 %, in its rheological properties. The dispersed oil phase reduces dusting and caking of fertilizer pellets which was observed in coatings based only on water. This is thought to be at least partially due to the excellent binding of the micronutrient particles to the surface of the fertilizer. The coating can be formulated with an adjustable degree of hydrophobicity which contributes to a good flowability, abrasion resistance and humidity resistance. The humidity resistance can significantly retard the release of fertilizer into the soil and increase the shelf life of the coated fertilizer when exposed to air. The hydrophilic elements of the coating formulation can interact with moisture in the soil, aiding fertilizer release. At the same time, limiting the oil phase such that it is dispersed within the aqueous phase provides for an optimal release profile of nutrients from the fertilizer pellets when the coating is applied to such pellets and dried. It is thought that this is due to the coating being thin enough after evaporation of water such that it can be attacked and gradually broken down by the surrounding soil at an optimal rate when in use.

The dispersion of the oil in the aqueous phase as a suspo-emulsion has also been found to be advantageous over the use of a bulk oil phase, when considering the biodegradability of the coating after its disintegration into the soil. The dispersed oil preferably takes the form of fine droplets which provides a high surface area of attack for local micro-organisms. After serving its main function of binding the micronutrient particles to the surface of the fertilizer pellets and controlling the release of nutrients from the fertilizer pellets, the oil can be quickly broken down, maintaining the chemical equilibrium of the soil and leading to less soil contamination.

The inventive coating formulation is further distinguished by the presence of a reclaimed material from a waste and/or side stream of a biologically based process in the oil phase. The reclaimed material can on the one hand provide additional micronutrients to the coating whilst on the other hand being a highly biodegradable binder and easy to handle and apply. Various reclaimed materials were also found to have a positive effect on the hardness of the coated fertilizer produced and to promote desirable microbial activity in the rhizosphere. Due to the origin of the reclaimed material being a biologically based process, the material often contains micronutrients such as Manganese, Boron, Copper, Iron and Zinc which can be returned to the ecosystem to counteract soil depletion. Due to the prior processing of the material which has been produced as a waste or side stream, long chain fatty acids are thought to be shortened and complex molecules hydrolyzed, thermolyzed, pyrolyzed, broken down by enzymes or by microorganisms. Micronutrients from the reclaimed material are therefore highly bioavailable to plant roots in the soil, such that they can dramatically increase the success of a coated fertilizer. Due to its high bioavailability and broken-down chemical structures, the reclaimed material is also susceptible to attack by local microorganisms in the soil, making it rapidly biodegradable.

At the same time, the addition of a reclaimed material has a positive effect on the physical properties of the coating formulation, increasing the stability of the suspo-emulsion. Due to their typically hydrophobic or amphiphilic components and/or their surface tension, the reclaimed materials also add to the binding effect of the oil, providing a coating which can be applied to fertilizer granules without excessive dustiness or stickiness. Additional physical properties of the coating when applied to the fertilizer, such as the hardness, abrasion resistance, impact resistance and critical relevant humidity, also benefit from the presence of the reclaimed material as will be demonstrated further below. The coating thus does not prematurely flake or rub off the surface of the fertilizer granules but instead disintegrates gradually when the coated fertilizer is added to the soil.

It was surprising that reclaimed materials from biological processes could be used in a coating formulation. It was further surprising that despite the natural variations in consistency and composition between batches of reclaimed materials, these could still be used to form a stable suspo-emulsion with a long shelf-life. Such a suspo-emulsion uses renewable and recycled materials and is thus especially ecological.

Suspended micronutrient particles in the oil-in-water emulsion can be evenly dispersed without unwanted agglomeration or settling behaviour. The coating formulation thus has a smooth consistency which allows for even coating and a uniform distribution of micronutrients in the coating. The local provision of high doses of micronutrients or of patches without micronutrients can thus be avoided.

Compared to the micronutrient coatings of the prior art which rely heavily on petroleum-based binders or dispersants, the inventive micronutrient coating formulation provides a coating which is biodegradable. This is especially advantageous for long-term soil health and water quality, such that coated fertilizer granules can be used long-term without an overall deterioration in crop yield due to soil poisoning. These advantages will become clearer in light of the specific examples provided in the detailed description.

In the sense of the invention, a "coating formulation" preferably describes the composition of a fluid product configured for use in coating a fertilizer material, in particular fertilizer granules. The coating formulation preferably refers to the composition of the coating before application onto the fertilizer granules, in particular before any components of the coating formulation are evaporated, degraded or otherwise changed by exposure to the environment.

In the sense of the invention, a "fertilizer" is preferably any material added to soil, sand, water or another growth medium to increase the yield of a crop. The fertilizer preferably comprises nutrients, especially macronutrients, required for plant health and/or plant growth. Examples of such macronutrients include nitrogen, phosphorus, potassium, calcium, sulfur and magnesium. Examples of known fertilizers include MAP (monoammonium phosphate), DAP (diammonium phosphate), ammonium sulfate, NPK (nitrogen, phosphorus and potassium), NPKS (nitrogen, phosphorus, potassium and sulfur), potash and urea based. While fertilizers may be provided in any form such as powders and sprays, it is particularly preferable for the fertilizer to be provided in solid form, in particular in a granulate form. This may include pellets, chips, beads and the like. The "solid fertilizer material" preferably refers to solid fertilizer granules but may also refer to alternative forms of fertilizer such as briquettes. The skilled person is aware that features and advantages of the coating formulation which are described with reference to fertilizer granules are also applicable to other forms of solid fertilizer.

In the sense of the invention, "biodegradability" is preferably a measure of the length of time taken for a material to decompose after exposure to biological elements, in particular to biological elements present in soil. Decomposition of a coating preferably comprises breakage of the organic polymers to dimers or monomers. The biodegradability may for example be determined using an OxiTop measurement apparatus. A known mass of the material to be tested may be exposed to microorganisms in a test bottle. The microorganisms may convert oxygen ($O_2$) to carbon dioxide ($CO_2$) during the biodegradation of the test material. OxiTop® is preferably a cap-shaped pressure meter attached to a test bottle which measures biochemical oxygen demand by detecting the degree to which air pressure in the bottle decreases. After a test bottle is sealed with an OxiTop® cap, the bottle may be incubated in a thermostatic chamber (e.g. IN804, Yamato Scientific, Japan). According to the OECD (Guideline for Testing Chemicals: Ready biodegradability (1992)) and the CSCL (Guideline of Chemical Substances Control Law: Biodegradability Test of Chemical Substances by Microorganisms (2018) (in Japanese)) guidelines, when the value of biochemical oxygen demand during a test period reaches 60% of a theoretical oxygen demand for a test chemical (particularly in the 301C or the 301F test procedures), the test chemical is considered to be completely degraded (and the remaining 40% is assumed to have been assimilated by microorganisms).

In the sense of the invention, the term "biodegradable" preferably describes a material which can be degraded by biological elements to a degree of at least 70 % by mass within a time period of no more than 2 years, preferably no more than 1 year, more preferably no more than 6 months and especially preferably no more than 90 days. A biodegradable coating is preferably free of non-biodegradable components such as non-biodegradable plastics, dispersants and dyes which require over 2 years, in particular over 5 years to degrade in soil. Non-biodegradable components may be limited to the solid micronutrient particles. As these are used to improve soil quality and are taken up by plants, they are not considered an environmental hazard.

In the sense of the invention, the term "aqueous phase" preferably refers to a fraction of the formulation, which is distinct from the oil phase, in particular by forming an observable interface with the oil phase. The aqueous phase preferably comprises water as well as any other components dissolved and/or suspended in the water. The components dissolved and/or suspended in the water are preferably at least miscible with water but may have no or a limited solubility with the water. Solids suspended in the aqueous phase are preferably considered to form a part of said aqueous phase. Unless otherwise specified, such solids are not considered a phase of their own in the context of this invention.

In the sense of the invention, the term "oil phase" preferably refers to a fraction of the formulation, which is distinct from the aqueous phase, in particular by forming an observable interface with the aqueous phase. The oil phase is preferably non-miscible with water at room temperature. It is preferred that the oil phase comprise any non-aqueous liquid and thus may also be referred to as a "non-aqueous phase". The oil phase may comprise an oil, the oil preferably being any substantially non-polar substance which tends to form a separate phase to the aqueous phase. Such an oil or non-aqueous liquid may comprise fatty acids, mono-, di- or triglycerides, organic solvents and/or any other fluid with a higher miscibility and/or solubility in the oil phase than the water.

In the sense of the invention, the term "dispersed" preferably means that a discontinuous phase is separated into solid particles or fluid droplets, the solid particles or fluid droplets being separated from one another and surrounded by a continuous phase. Preferably the oil phase is the discontinuous phase while the aqueous phase is the continuous phase.

In the sense of the invention, the term "suspo-emulsion" preferably refers to a substantially homogeneous mixture including at least two distinct liquid phases and dispersed solids, the dispersed solids being suspended in one or both of the liquid phases. It is particularly preferable that a discontinuous liquid phase be dispersed in a continuous liquid phase, while at the same time, solid particles are suspended in the continuous liquid phase. The solid particles may include micronutrient particles and optionally another dispersed solid such as a filler or a ground reclaimed material from a biologically based process. Preferably, the solid particles comprise micronutrient particles which are suspended in the aqueous phase while oil phase droplets are dispersed in the aqueous phase.

In the sense of the invention, the term "micronutrient particles" preferably refers to one or more solid materials in granular form, the solid materials comprising one or more micronutrient sources. A micronutrient source is for example a compound containing a micronutrient element such as Boron, Zinc, Copper, Molybdenum, Iron, Chlorine, Manganese and Nickel. Examples of micronutrient particles include naturally occurring minerals such as colemanite, kernite, ulexite, tincal, boric acid, sphalerite, smithsonite, hemimorphite, wurtzite, hydrozincite, native copper, chalcopyrite, bornite, digenite, covellite, chalcolite, copper sulfosalts, tetrahedite-tennantite, enargite, azurite, malachite, cuprite, tenorite and others which are ground into a powder form.

In the sense of the invention, the term "reclaimed material from a waste and/or side stream of a biologically based process" preferably refers to a material of organic and/or biological origin which has undergone a treatment which preferably includes a biological process. The treatment preferably does not have the production of components of a coating formulation as its main purpose, such that the reclaimed materials are preferably not the primary product of the treatment. The reclaimed materials are preferably materials which would otherwise be disposed of or which would have a low value in the context of the treatment.

As an illustration, a food manufacturing process may be considered a biological process due to the biological origins of the foods and/or the biological purpose of the food (for animal or human consumption). The main product of the food manufacturing process may be pre-fried frozen potato chips. The oil or fat used to pre-fry the potato chips may be considered a waste product or side product. The used frying oil differs in its chemical and physical properties in comparison to unused oil and can thus be identified by the skilled person as a reclaimed material.

In a preferred embodiment of the invention, the coating formulation is especially adapted for use on a solid fertilizer, in particular on a granulate fertilizer. Such a coating formulation may in particular be configured for low dusting and preferably for good binding to the grainy surface of a solid fertilizer granule.

In a preferred embodiment of the invention, a proportion by weight of the aqueous phase exceeds a proportion by weight of the oil phase in the biodegradable coating formulation, wherein preferably the oil phase constitutes up to 45 w/w %, more preferably up to 35 w/w %, more preferably up to 20 w/w %, more preferably up to 10 w/w %, even more preferably up to 5 w/w %, of the biodegradable coating formulation.

By increasing the proportion of the aqueous phase, this forms the continuous phase of the suspo-emulsion, such that both the micronutrient particles and the oil can be dispersed therein. At oil fractions up to 45 w/w %, preferably up to 35 w/w %, more preferably up to 25 w/w %, even more preferably up to 5 w/w % the discontinuous oil phase forms droplets in the aqueous phase. At smaller fractions of oil, the droplets can be made especially small. This is shown later herein with reference to microscope images. The very small oil droplets can be dispersed very homogeneously such as to form a stable suspension which can be stored for several months without significant changes to its rheological properties. At the same time, the small oil droplets have sufficient interfacial tension between the oil and the aqueous phase such as to prevent micronutrient particles from entering the oil droplets.

The preferred proportions of oil and water thus provide a suspo-emulsion having micronutrient particles suspended substantially only in the aqueous phase. This arrangement provides a high stability of the coating. The time required to biodegrade the coating is also reduced when the oil phase fraction and the oil droplet fraction is kept low. Without wishing to be bound by theory, it is thought that this allows the coating to be made especially thin when applied to a fertilizer granule.

In a further preferred embodiment of the invention, the aqueous phase comprises an aqueous carrier in which the micronutrient particles are suspended and wherein preferably the proportion by weight of the aqueous carrier exceeds the proportion by weight of the oil phase in the biodegradable coating formulation. Preferably, the aqueous carrier constitutes more than 50 w/w %, more preferably more than 60 w/w %, even more preferably more than 70 w/w %, especially preferably more than 90 w/w % of the biodegradable coating formulation.

A high proportion of aqueous carrier in the biodegradable coating formulation further increases the stability of the suspo-emulsion and adjusts the viscosity, which aids in coating of the fertilizer granules. The aqueous carrier could preferably be at least partially evaporated during the coating process such that the finished coating fertilizer granules only needed to have a very thin micronutrient coating with the oil droplets sufficiently binding the micronutrient particles to the granule surface, leaving a substantially solid, hard coating. Such a coating disintegrates slowly in the soil but can then be rapidly biodegraded due to its thinness.

In the sense of the invention, an "aqueous carrier" is preferably a polar fluid forming the majority of the aqueous phase. The aqueous carrier is preferably a single component of the aqueous phase, such as water and/or fermentation broth and does not include additives such as colorants, emulsifiers, rheology modifiers and the like. Preferably, the aqueous carrier is water.

In a further preferred embodiment of the invention, at least 90 w/w%, preferably at least 95 w/w %, more preferably at least 97 w/w % of the micronutrient particles are suspended in the aqueous phase and/or at an interface between the aqueous phase and the oil phase. Most preferably, the aforementioned percentages of micronutrient particles are suspended in the bulk aqueous phase rather than at the interface between the aqueous phase and the oil phase. This surprisingly provides improved fertilization results when used as a fertilizer coating.

Additionally, the provision of substantially all micronutrient particles in the aqueous phase reduces the risk of particle agglomeration which is observed in less stable formulations produced with much larger quantities of oil than water. The micronutrient particles can instead be well distributed across the aqueous bulk phase which is stable and homogeneous. High viscosities can be achieved which provide good control when applying the coating to the fertilizer granules at a desired uniform thickness. When applied to a solid fertilizer granules, the coating is even and bonded well to the fertilizer surface without dusting, caking or flaking.

In a further preferred embodiment of the invention, micronutrient particles are present in the biodegradable coating formulation at a concentration of 0.1 - 35 w/w %, preferably between 0.1 - 20 w/w%, even more preferably between 0.1 - 18 w/w %. It may also be preferred for the micronutrients to be present in the biodegradable coating formulation at a concentration of at least 0.5 w/w %, preferably at least 1 w/w %, especially preferably at least 3 w/w %. In some embodiments, the concentration of micronutrient particles in the formulation is between 3-18 w/w %. At these preferred amounts, the micronutrient particles can be dispersed well in the suspo-emulsion whilst providing sufficient hardness once the coating had solidified on the surface of the fertilizer. Additionally, the preferred concentrations of micronutrient particles present a balance between providing sufficient micronutrients to promote an improved yield of crops while at the same time avoiding soil and water poisoning. The preferred amounts can thus compensate sufficiently for the lack of micronutrients in depleted soils.

In a further preferred embodiment of the invention, micronutrient particles are present in the biodegradable coating formulation at a concentration of at least 10 w/w %, more preferably at least 20 w/w %, even more preferably at least 30 w/w %. Such a coating formulation can be especially densely packed with dispersed micronutrient particles such that the coating can significantly increase the amount of micronutrients available to a crop. At the same time, such a coating formulation can be made especially viscous and coated very evenly over a fertilizer granule. The coating, once dried, could be especially hard and therefore be attacked only slowly once placed in the soil, causing both the micronutrients and the macronutrients to be released gradually over a long period of time. The slow release protects the soil from disequilibrium and from leaching.

In a further preferred embodiment of the invention, the biologically based process is a microbial process, an agricultural process, an aquacultural process, a forestry process, an animal rearing process, an apicultural process, a plant-based oil extraction process, a food preparation process or a food manufacturing process, wherein the process is preferably a food manufacturing process.

Fermentation is an example of a microbial process which has various food products as a main product. For example, fermentation can be used in producing various alcoholic drinks, cheeses, tempeh, tofu and various meat-alternatives. These processes produce side or waste products such as lactic acid, organic acids and fatty acids which may be reclaimed and used to adjust the properties of the coating formulation, for example, fermentation broth.

Agricultural processes may include the production of any type of food from a crop. Non-edible or less valuable parts of crops such as corn stalks and corn leaves may be collected and considered as an agricultural side or waste product. These side or waste products may be processed further, e.g. by fermentation, to produce additional side products. For example, biofuel from fermented corn has glycerol as a major side-product, which may be used in the inventive coating formulation, e.g. as a humectant, emollient or plasticizer.

A food manufacturing process may comprise additionally processing edible produce from a crop, such as by milling, sieving, distilling, refining or otherwise. As a preferred example, refining sugar cane to produce granulated white sugar may be considered a food manufacturing process. As a side product of this process, less valuable cane molasses is produced.

Cane molasses can act as an excellent binder due to its high viscosity. It is also high in sucrose, glucose and fructose as well as various soil nutrients such as calcium, iron, magnesium, manganese, phosphorus, potassium, sodium and zinc. When added to soil, it can increase the local microbial activity, said microbial activity releasing various acids which are known to function as defensive chemicals for plant roots, which reduce the risk of disease. The increased microbial activity further aids in the breakdown of the components of the coating formulation, reducing the time for this to biodegrade in a soil environment. Molasses has further been found to increase the homogeneity of the coating formulation and the hardness of coated fertilizer granules. The use of molasses as a reclaimed material in a coating formulation is thus especially advantageous.

A preferred further example of a food manufacturing process is the production of refined starch from potatoes. Side products of this process include potato juice, coagulated potato juice, potato pulp and juicy water. The various juices and juicy water produced may be concentrated to form a thick syrup-like material such as the commercial product Protamylasse. Due to the presence of starch, fiber and/or plant-based proteins, these concentrated materials function especially well as binders which attach the micronutrient particles to the surface of a solid fertilizer granule. Additionally, these concentrated materials are very high in fats and soil nutrients such as potassium, nitrogen, magnesium, phosphorus and sulfur. They can thus further promote plant growth and health. The effect on homogeneity and fertilizer hardness is similar to that observed for molasses.

A preferred food manufacturing side-product with similar advantageous properties is Vinasse which results from distillation processes in the production of alcoholic drinks. For the same reasons as explained for molasses and Protamylasse, Vinasse can act as an excellent binder and can increase the nutrient content of the coating formulation.

A food preparation process may refer to a process downstream of food manufacturing, in which food is prepared for immediate consumption or for consumption after re-heating. As a preferred example, frying foods in fat or oil is a food preparation process which produces fried goods such as potato chips. The frying may occur in a mass industrial process or at a point of sale, e.g. in fast food stores, where the frying oil is regularly collected and disposed of separately to other wastes. The used frying oil may thus be considered a material which can be reclaimed in the inventive coating formulation. Not only can the used frying oil carry out the binding function of the oil phase by being dispersed into droplets, it can increase the biodegradability and the nutrient content of the coating formulation by being more attractive to soil microorganisms.

Aquacultural or animal rearing processes may include the harvest and//or disposal of non-edible or less valuable portions of fish or farm animals or their products. Bones and eggshells for example are waste products which can be used as reclaimed materials in the inventive coating formulation. When ground, these materials can provide a pasty texture which increases the viscosity of the coating formulation. These materials are also rich in nutrients such as calcium which increase the nutrient content of fertilizers whilst being provided in a highly biodegradable form. Other waste products based for example on animal blood, fish scales or algal biomass may also be used as reclaimed materials in the coating formulation, in particular after conversion to a paste, powder or an otherwise highly dispersible form.

In a further preferred embodiment of the invention, the reclaimed material is selected to function as a binder and/or to supply one or more micro- or macronutrients to the soil.

In the sense of the invention, a "binder" is preferably a material selected to hold other materials together to form a consistent whole. Binders may preferably interact chemically or electrostatically with multiple components of the coating formulation, increasing their adhesion to one another and/or to a surface of a solid fertilizer granule. A binder may preferably also be a thickener or a naturally occurring material eg. wax.

In a further preferred embodiment of the invention, the reclaimed material comprises any one or more of the following: used cooking oil, used cooking fat, potato peel extract, a natural wax (bee-wax, soy-wax, reis-wax, rosin-wax, carnauba-wax and others), molasses, protamylasse, vinasse, coffee waste, bone powder, eggshell, wherein the reclaimed material preferably comprises a combination of used cooking oil, tung oil, linseed oil, teak oil or natural waxes and any one of: molasses, protamylasse or vinasse.

The preferred reclaimed materials are especially high in micro- and/or macronutrients and are surprisingly well mixable with the further components of the coating formulation. The preferred reclaimed materials are also highly biodegradable in soil due to their natural origin and high interaction with microorganisms typically found in soil.

Molasses, protamylasse and vinasse are especially high in their film-formation capacity which improves the coating process, ensuring fertilizer granules are fully coated. Used cooking oil has an improved biodegradability and binding quality, whilst adding further to the nutrient content of the coating due to the presence of fine residues from cooking foods.

In a further preferred embodiment of the invention, the reclaimed material is a fat or oil and constitutes at least 50 w/w %, preferably at least 60 w/w %, even more preferably at least 70 w/w % of the oil phase. The reclaimed material may also constitute substantially all of the oil phase. Such a coating formulation is especially ecological to manufacture and highly biodegradable.

In a further preferred embodiment of the invention, the reclaimed material is present in the biodegradable coating formulation at a weight percentage of 5 - 35 w/w%. At these weight percentages the coating formulation has an improved nutrient content, viscosity and binding behavior to the surface of the solid fertilizer granules while being biodegradable within 2 years. The coating formulation is however still pumpable and coatable at the achieved viscosities.

In a further preferred embodiment of the invention, the micronutrient particles comprise at least a first micronutrient and a second micronutrient, the first and second micronutrient preferably belonging to the group comprising a source of: Boron, Zinc, Cobalt, Copper, Iron, Manganese, Molybdenum, Selenium, Nickel, Halogens and Alkali Metals, wherein a combination of Boron or Zinc with a second micronutrient is preferred.

Whilst "micronutrient particles" are referred to herein by the main elements required by the soil which are present in the micronutrient particles, it is noted that micronutrients need not be provided in element form. Rather, molecular compounds, salts, complexes or naturally occurring rocks, minerals or organic materials which comprise the element may all be considered as micronutrients which deliver the required element. The element may also be present in combination with other elements required by the soil. For example, a Boron micronutrient particle preferably does not comprise pure Boron but rather boric acid ($H_3BO_3$), colemanite (a naturally occurring mineral with formula $Ca[B_3O_4(OH)_3] \cdot H_2O$, which also delivers the useful nutrient calcium to the soil), borate ester ($B(OR)_3$) or any other suitable material which can deliver boron to soil. The term "boron micronutrient particles" is therefore merely a shorthand for differentiating these particles from others which are selected to deliver a different micronutrient element to the soil.

By including at least two different micronutrient types in the coating formulation, the coating can compensate for multiple soil deficiencies in a single application of coated fertilizer granules. An advantage of the inventive formulation is that micronutrient particles of different sizes, densities or solubilities can be well-mixed and suspended in the aqueous phase without unwanted agglomeration or settling. This overcomes a challenge of the prior art, acknowledged for example by paragraph [0005] of EP2958877B1, whereby particles of different size and density tend to segregate during storage and during the coating process. The suspo-emulsion of the present invention keeps the different types of micronutrient particles stable and evenly distributed. The oil phase and/or reclaimed material of the present invention holds particles of different types to the surface of the fertilizer granule.

In a further preferred embodiment of the invention, the coating formulation contains at least three different types of micronutrients, more preferably at least four different types of micronutrients, even more preferably at least five different types of micronutrients.

In a further preferred embodiment of the invention, a first micronutrient is present in the biodegradable coating formulation at a concentration of at least 0.01 w/w % , preferably at least 2 w/w %, even more preferably at least 3 w/w %, the first micronutrient preferably being a boron source, and a second micronutrient is present in the biodegradable coating formulation at a concentration of at least 0.01 w/w %, preferably at least 5 w/w %, even more preferably at least 7 w/w % the second micronutrient preferably being a zinc source.

The preferred amounts of micronutrients are sufficient to have an impact on the yield of a crop. The preferred amounts of the first and second micronutrient allow for a sufficient solid content in the coating formulation to provide a sufficiently hard coating which is sufficiently resistant to attack by elements in the local soil, such that the coating degrades slowly to release the fertilizer.

The combination of zinc and boron was surprisingly found to improve the local quality of most soils. The inclusion of a higher concentration of zinc has the further advantage of providing a balanced slow release of both micronutrients, taking into account their solubilities in water. As minerals such as ZnO are substantially insoluble in water, their release occurs more slowly in soil and the risk of leaching is reduced, such that higher concentrations of the zinc-containing micronutrient particles can advantageously be applied to promote plant growth. As boron-containing minerals such as colemanite or boric acid are at least sparingly soluble in water, slightly lower relative amounts are advantageous.

In a further preferred embodiment of the invention, the biodegradable coating formulation further comprises a humectant, a rheology modifier, an emulsifier, a co-emulsifier, a co-solvent, a filler and/or a preservative. Any of these components could be used to adjust the rheological properties and the stability of the coating formulation. This further contributes to keeping solid micronutrient particles, optionally of different types, evenly suspended in the aqueous phase without agglomeration or settling. The coating formulation thus does not settle during storage and can maintain substantially the same viscosity for a period of several months or more.

In a preferred embodiment of the invention, the filler is an inert granulate solid which is nontoxic for plants and is compatible with soil. The filler may preferably be selected from a group comprising calcium carbonate, kaolin, talc or ashes. The filler may aid in achieving fast drying times and adequate binding in the coating formulation. The filler is preferably suspended in the aqueous phase of the suspo-emulsion.

In a further preferred embodiment of the invention, the humectant is selected from the group comprising glycerin, aloe vera gel or polyols.

In a further preferred embodiment of the invention, the rheology modifier is selected from the group comprising potato starch, cellulose, agar-agar, gelatin, pectin, xanthan gum, tapioca and locust bean gum.

In a further preferred embodiment of the invention, the emulsifier and/or co-emulsifier is/are selected from a group comprising decyl glucoside, lauryl glucoside, emulsan, cetearyl alcohol, sodium cocoyl isethionate, sodium cocoyl glycinate, calcium stearoyl-2-lactylate, sorbitan, polysorbates, carrageenan and egg lecithin.

In a further preferred embodiment of the invention, the preservative is selected from the group comprising lactic acid, sodium chloride, acetic acid, ascorbic acid, sorbic acid, sodium benzoate, sodium metabisulfite, 2-phenoxyethanol, ethylexyl glycerin and urea.

In a further preferred embodiment of the invention, the suspo-emulsion has a substantially constant viscosity in a period between 15 - 60 days after storage at room temperature and also at 40°C indicating that the product has a long-term stability. Viscosity in the first 15 days after preparation of the coating formulation can be slightly variable due to the formulation being in a phase of stabilization. Afterwards, the inventive suspo-emulsion has a substantially constant viscosity (for example, ca. 4000 cP for a sample containing boron-containing micronutrient particles) for at least a further 15 days. This will be explained further herein with reference to experimental results. Without wishing to be bound by theory, it is thought that that the provision of oil dispersed in the suspo-emulsion and a reclaimed material from a biological process leads to a surprising increase in the stability which is possibly due to the high viscosity of such a suspo-emulsion. The presence of well dispersed oil droplets possibly prevents the settling of the suspended solid micronutrient particles.

In a further preferred embodiment of the invention, at least 70 %, more preferably at least 80 %, of the biodegradable coating formulation is biodegradable within two years, preferably within one year, more preferably within six months. Preferably, the biodegradability is determined by using an OxiTop measurement apparatus and a measurement technique as set out above and refers to the percentage by mass of the biodegradable coating formulation, which is decomposed by biological elements, taking into account the percentage by mass of the biodegradable coating formulation which is assimilated by microorganisms. The biodegradability may be adjusted by selecting the amount and type of non-aqueous fluid to be used in the oil phase and by selecting the amount and type of reclaimed material, which may itself be a non-aqueous fluid. Biologically toxic aqueous solvents such as polyethylene glycol may be avoided. Furthermore, the biodegradability may be adjusted by selecting or avoiding further additives such as colorants and petroleum-based binders.

In preferred embodiment of the invention, the coating formulation is free of petroleum-based components. Preferably, the coating formulation is free of microplastics, more preferably free of plastics in general.

In the sense of the invention, a "petroleum-based component" is preferably any material derived from crude oil. Such components include liquid fuels, lubricants, paraffin wax, slack wax, tar and asphalt as well as their derivatives. Petrochemicals are preferably also considered petroleum-based components, in particular chemicals derived from reactions which include crude oil fractions as a reactant. These may include polymers such as polyvinyl chloride, polyethylene and polystyrene which may in turn be used to form plastics and microplastics.

Where components may be derived from crude oil or from alternative sources, such as the case of ethanol, ammonia, sulfur and acetic acid, it is preferred that these be derived from alternative sources. This reduces the environmental impact of the coating formulation.

In a further aspect, the invention relates to a method of producing a biodegradable coating formulation according to any of the embodiments disclosed herein, the method comprising:

- providing an oil phase, comprising at least one reclaimed material from a waste and/or side stream of a biologically based process;

- providing water and/or one or more aqueous solutions to form an aqueous phase,

- adding the oil phase to the aqueous phase and dispersing the oil phase therein in order to form an emulsion;

- adding particles of a micronutrient to the aqueous phase before addition of the oil phase to the aqueous phase and/or adding particles of a micronutrient to the emulsion; and

- at least partially dissolving or suspending the particles of the micronutrient in the aqueous phase or to the emulsion in order to form a suspo-emulsion.

The addition of the micronutrient particles which are preferably insoluble in the aqueous phase, to this phase or to the emulsion advantageously prevents the micronutrient particles from joining the oil phase. The already formed droplets of the dispersed oil phase are substantially not penetrated by the micronutrient particles. This is distinct from the techniques of the state of the art according to which a suspo-emulsion is formed first from a concentrate containing oil and solid particles to which water is later added. The method of the invention instead ensures uniform suspension of the micronutrient particles in the aqueous phase, such that the suspo-emulsion is free of clumps resulting from unwanted agglomeration. Instead, the micronutrient particles are well distributed and can remain suspended for several months without any settling. This is thought to be due to the effect of the dispersed oil phase, the process and bio-based raw materials used to offer stability for the formulation.

Moreover, by providing at least one reclaimed material in the oil phase, said oil phase can be rapidly biodegraded whilst also contributing to raising the nutrient content of the coating formulation. This is for example due to the reclaimed material promoting microbial activity in the soil, such that the micro-organisms release various acids such as succinic acid, malic acid and butyric acid which serve to break through the coating in the soil. The reclaimed material may itself comprise relevant micronutrients due to its biological origin.

In a preferred embodiment of the invention, the oil phase is already dispersed in the aqueous phase before the micronutrient particles, which are preferably at least partially insoluble in aqueous phase, are added to the emulsion. This provides more stable results.

Some of the micronutrient particles used may be at least partially soluble in the aqueous phase, such as the case of boric acid. In this case, it is preferable that some of the boric acid is left undissolved and merely suspended, to form part of the solid particles suspended in the suspo-emulsion. Alternatively, a second micronutrient may also be included in the form of suspended micronutrient particles. The suspo-emulsion may also comprise other types of suspended solids such as a filler or a ground reclaimed material, such as eggshell powder.

In some preferred embodiments of the invention, a reclaimed material from a biological process, in particular a powdered solid material, is additionally added to the aqueous phase. Partially soluble reclaimed materials or solids may thus be distributed in the continuous aqueous phase such that their loads in the coating formulation can be made very high. The oil droplets may remain substantially free of solids, which increases their stability.

In a preferred embodiment of the invention, the addition of the micronutrient particles to the aqueous phase or to the emulsion occurs under agitation and heating to at least 50 °C. The heating increases the solubility of sparingly soluble micronutrient particles such as boric acid, increasing the loading of said micronutrients in the aqueous phase. Additionally, the agitation improves dispersion and uniformity.

In a further preferred embodiment of the invention, the oil phase including the reclaimed material is homogenized under heating to at least 50 °C, preferably ca. 70 °C, before being added to the aqueous phase. This also increases the solubility of any particles present in the reclaimed material and/or any other materials added to the oil phase, increasing their loading into the coating formulation. Under these conditions and using a specific mechanical agitation, the oil droplets could additionally be made very small.

In a further preferred embodiment of the invention, a humectant and/or a rheology modifier are provided, wherein the aqueous phase is added to the humectant and/or rheology modifier, preferably under heating to at least 50 °C. The humectant may increase the water absorption capacity and swelling of the finished coating, such that it can be attacked slowly by the surrounding soil when used. Notably, the humectant may itself be a reclaimed material. Molasses, urea, aloe vera gel, egg, glycerol from biofuel production and various used oils such as castor oil have been surprisingly found to be suitable humectants for use in the coating formulation. A rheology modifier may increase the thickness and homogeneity of the coating formulation, preventing settling of solid particles or the merging of oil droplets. This increases the shelf-life of the coating formulation. Advantageously, the rheology modifier may be a natural, biologically based material such as a natural gum, in particular xanthan gum. The rheology modifier may also be a reclaimed material from a biological process. It may also be preferred for the same material to act as both humectant and rheology modifier.

In a further preferred embodiment of the invention, a co-emulsifier and a co-solvent are added to the aqueous phase with the addition of the micronutrient particles. These may increase the stability and homogeneity of the coating formulation.

In a further preferred embodiment of the invention, a filler is added to the emulsion or suspo-emulsion under agitation. The filler preferably comprises a solid material which is innocuous and/or native to the soil. A filler can increase the viscosity of the coating, improving its application to the surface of the solid fertilizer granule The filler may also increase the solid content of the coating such that it is thicker and/or harder after application, slowing down its attack when added to the soil. This can be surprisingly used to adjust the release profile of the fertilizer granules.

In a further preferred embodiment of the invention, a preservative is added to the suspo-emulsion at a temperature lower than 40 °C. The preservative further increases the shelf-life of the coating formulation, for example by preventing premature decomposition of the biologically based components of the coating by microorganisms.

In a further aspect, the invention relates to a method of coating a granulate solid fertilizer material comprising applying the biodegradable coating formulation according to any of the embodiments disclosed herein onto a granulate solid fertilizer material. The granulate solid fertilizer can hereby be enveloped partially or fully to slow or control the release of fertilizer material therein. The granulate solid fertilizer material may additionally be adapted for use in soils deficient in one or more micronutrient by applying a specifically formulated coating according to a preferred embodiment of the invention. The coating can compensate for the micronutrient depletion in the soil whilst being biodegradable.

In a preferred embodiment of the invention, the application is carried out by spraying, dipping, brushing, roll coating, spin coating, flow coating or blending. These techniques have been found to provide uniform coatings of sufficient thickness. It is especially preferred that the coating be carried out in one step.

Preferably, the coating formulation is dried during or after the coating procedure. Preferably, the coated fertilizer granules have a moisture content less than 3 w/w %, in particular 1 - 3 w/w %. This reduces caking and reduces the risk of coated fertilizer granules sticking together or softening during storage. The small residual amount of moisture further reduces the dustiness of the coated fertilizer.

In a further aspect, the invention relates to a micronutrient coated fertilizer producible by applying a biodegradable coating formulation according to any of the embodiments disclosed herein to a solid fertilizer.

Such a coated fertilizer has a slow and/or controlled release of nutrients, such that it presents a much lowered risk of soil or groundwater toxicity. The oil phase and/or reclaimed material binds the micronutrient particles sufficiently well to the granulate, so that these do not dust off or flake after application. Rather, these form a substantially continuous solid layer which can be attacked and broken down gradually by the soil, allowing the fertilizer to be released. Due to said slow and/or controlled release, the coated fertilizer can be applied with a lower frequency or amount, as the rapid loss of nutrients to lower areas of the soil does not need to be compensated for. The coated fertilizer is thus especially efficient and economic to use. Furthermore, the coated fertilizer is environmentally friendly as its coating can be biodegraded by microorganisms occurring normally in soil.

Tests carried out on fertilizer granules coated with the inventive formulation further revealed additional advantages such as an elevated abrasion resistance, low dustiness, appropriate hardness, impact resistance and a suitable critical relative humidity. These are explained further in the detailed description.

In a preferred embodiment of the invention, the micronutrient coated fertilizer comprises coated potash granules, NPK granules, CAN granules and/or ammonium sulphate granules.

In a preferred embodiment of the invention, the micronutrient coated fertilizer has a micronutrient load of at least 0.05 w/w %, preferably at least 0.1 w/w % of a first micronutrient, in particular a boron source or a zinc source, and optionally a micronutrient load of at least 0.1 w/w %, preferably at least 0.3 w/w % of a second micronutrient. This preferably refers to the weight of the micronutrient particles as a percentage of the overall weight of the coated fertilizer granule. Preferably, the first micronutrient is a boron source and the second micronutrient is a zinc source, Micronutrients can thus be provided to crops in an agriculturally relevant amount, thereby making the micronutrient concentration tunable.

In a further preferred embodiment of the invention, the solid fertilizer is provided in granulate form having an average particle size of 0.1 - 10 mm, preferably 0.5 - 5 mm, especially preferably 1.5 - 4 mm. The granules may preferably take any form such as beads, pellets, chips or the like. In the case of approximately spherical beads, the average particle size preferably refers to a diameter. For other granule forms, the average particle size preferably refers to the diameter of an equivalent sphere having the same volume as the granule. At these preferred sizes, the coating formulation can be applied to the granulate fertilizer such that the micronutrients are present in an agriculturally relevant amount. The size of the granules is large enough for a gradual release of the bulk fertilizer once the coating had been sufficiently attacked by the local soil.

In a further preferred embodiment of the invention, the micronutrient coated fertilizer has a dried coating thickness of 5 - 100 $\mu$m, preferably 20 - 40 $\mu$m, especially preferably ca. 25 $\mu$m. Such a thickness interacts synergistically with the high binding forces provided by the non-aqueous phase to control the release of fertilizer from the bulk of the micronutrient coated fertilizer.

In a further preferred embodiment of the invention, the micronutrient coated fertilizer has a degree of dustiness lower than 5 mg/kg, a hardness greater than 20 N, a critical relative humidity of 50 - 70 %, in particular 55 - 60 %, and a moisture content of 1 - 3 w/w %.

In a further preferred embodiment of the invention, the micronutrient coated fertilizer has a controlled release profile, preferably such that not more than 30 % of the solid content of the micronutrient coated granulate solid fertilizer material is released within 1 day, preferably 7 days, more preferably 14 days of application of the fertilizer material to a soil. Preferably the composition and thickness of the micronutrient coating is adjusted depending on the desired release profile. Release profiles in which 30 % of the solid content is released within 6 hours were surprisingly found to be achievable. Slower releases are however preferred for most soil types.

Terms such as substantially, approximately, about, approximately, nearly, ca., etc. preferably describe a tolerance range of less than $\pm$ 20 %, preferably less than $\pm$ 10 %, particularly preferably less than $\pm$ 5 % and especially less than $\pm$ 1 % and include the exact value.

The average person skilled in the art will recognize that technical features, definitions and advantages of preferred embodiments of the biodegradable coating formulation according to the invention also apply to the method for producing it, the coating method and the micronutrient coated fertilizer according to the invention, and vice versa.

## DETAILED DESCRIPTION OF THE INVENTION AND EXAMPLES

It should be understood that various alternatives to the embodiments of the invention described herein may be employed in practicing the invention. It is intended that the claims of the invention define the scope of the invention and that the methods and products within the scope of these claims and their equivalents be covered thereby.

Without intending to be limiting, the invention will be explained in more detail with reference to exemplary embodiments and the following figures:

## BRIEF DESCRIPTION OF THE FIGURES

**Fig. 1** shows an optical microscopy image of a biodegradable coating according to a preferred embodiment of the invention (Formulation Ex-1) at 40x magnification.

**Fig. 2** shows an optical microscopy image of a biodegradable coating according to a preferred embodiment of the invention (Formulation Ex-1) at 1000x magnification.

**Fig. 3** shows an optical microscopy image of a biodegradable coating according to a preferred embodiment of the invention (Formulation Ex-4) at 40x magnification.

**Fig.4** shows an optical microscopy image of a biodegradable coating according to a preferred embodiment of the invention (Formulation Ex-4) at 1000x magnification.

**Fig. 5** shows an optical microscopy image of a water-based coating not according to the invention (Formulation Ex-8) at 40x magnification.

**Fig. 6** shows an optical microscopy image of a biodegradable coating according to a less preferred embodiment of the invention (Formulation Ex-9) at 40x magnification.

**Fig. 7** shows an optical microscopy image of an oil-based coating not according to the invention (Formulation Ex-10) at 40x magnification.

**Fig. 8** shows a particle size distribution for the solid particles present in a preferred embodiment of the invention (Formulation Ex-1).

**Fig. 9** shows the viscosity of biodegradable coatings according to three preferred embodiments of the invention.

**Fig. 10** is a scanning electron microscopy image of the surface of a coated fertilizer according to a preferred embodiment of the invention.

**Fig. 11** is a scanning electron microscopy image of a cross-section of the coated fertilizer of Fig. 10.

**Fig. 12** shows a release curve of fertilizer from a coated fertilizer according to a preferred embodiment of the invention and an uncoated fertilizer over 19 days.

**Fig. 13** shows a conductivity-concentration calibration curve for determining the release of an uncoated fertilizer.

**Fig. 14** shows a conductivity-concentration calibration curve for determining the release of a coated fertilizer according to a preferred embodiment of the invention.

**Fig. 15** shows a cumulative release of fertilizer from a coated fertilizer according to a preferred embodiment of the invention and an uncoated fertilizer over a period of 72 hours.

**Fig. 16A** is a schematic illustration of a theoretical model of the release of fertilizer from the coated fertilizer of the preferred embodiment of the invention, showing the attack phase.

**Fig. 16B** is a schematic illustration of the theoretical model of the release of fertilizer, showing the breakdown phase.

**Fig. 16C** is a schematic illustration of the theoretical model of the release of fertilizer, showing the disintegration phase.

## DETAILED DESCRIPTION OF THE PREFERRED EMBODIMENTS AND COMPARATIVE EXAMPLES

The inventors developed and tested 18 different micronutrient coating formulations (Ex-1 to Ex-20), some of which were according to the present invention and others which were merely used for comparison. The Examples Ex-1 to Ex-7, Ex-9 and Ex-11 to Ex-20 are all according to preferred embodiments of the present invention. Examples Ex-8 and Ex-10 are provided for mere comparison and do not fall under the invention. The following Table 1 provides the compositions of inventive formulations Ex-1 to Ex-7 and Ex-9 which are referred to later herein with reference to the Figures.

*Table 1: Formulations Ex-1 to Ex-7 and Ex-9 according to preferred embodiments of the invention:*

| Components | %w/w | | | | | | | |
|---|---|---|---|---|---|---|---|---|
| | **Ex-1** | **Ex-2** | **Ex-3** | **Ex-4** | **Ex-5** | **Ex-6** | **Ex-7** | **Ex-9** |
| First Micronutrient (Boric Acid) | 13.63 | 17.03 | - | 13.63 | 17.03 | 17.03 | 18.74 | 13.63 |
| Second Micronutrient (Zinc Oxide) | 6.97 | - | 17.42 | 6.97 | 8.71 | 8.71 | 9.78 | 6.97 |
| First Binder (waste cooking oil) | 8.00 | 8.00 | 10.00 | 10.00 | 10.00 | 10.00 | 10.00 | 50.00 |
| Second Binder (molasses) | - | - | - | 25.00 | 20.00 | 15.00 | 15.00 | - |
| Emulsifier | 0.50 2.00 | 1.50 | 1.50 | 1.50 | 1.50 | 1.50 | 1.50 | 1.50 |
| Co-Emulsifier | 0.50 | 0.50 | 0.50 | 0.50 | 0.50 | 0.50 | 0.50 | 0.50 |
| Co-Solvent | 1.50 | 1.50 | 1.50 | 2.50 | 2.50 | 2.50 | 2.50 | 1.50 |
| Filler | 5.00 | 5.00 | 5.00 | 3.50 | 3.50 | 3.50 | 3.00 | 5.00 |
| Humectant | 2.00 | 2.00 | 2.00 | 1.50 | 1.50 | 1.50 | 1.50 | 2.00 |
| Silicon emulsion | - | - | - | 0.20 | 0.20 | 0.20 | 0.20 | - |
| Rheology Modifier | 0.30 | 0.30 | 0.25 | 0.10 | 0.10 | 0.10 | 0.10 | 0.25 |
| Preservative | 0.10 | 0.10 | 0.10 | 0.15 | 0.15 | 0.15 | 0.15 | 0.10 |
| Solvent (water) | 60.56 | 64.57 | 62.23 | 34.46 | 34.31 | 39.31 | 37.03 | 18.56 |
| **Total** | 100 | 100 | 100 | 100 | 100 | 100 | 100 | 100 |

The following table provides further formulations Ex-11 to Ex-20 according to preferred embodiments of the invention. These formulations used reclaimed materials from biological process which were selected from the group comprising: cooking waste oil, molasses, soy way, rice wax, rosin resin, carnauba wax, potato peel extract and eggshell powder. All of the reclaimed materials tested in these formulations were found to bring advantages both to the stability and binding properties of the formulations and to the nutrient content. It was especially surprising that stable formulations could be produced using any of these materials, with formulations remaining stable between batches.

*Table 2: Formulations Ex-11 to Ex-20 according to preferred embodiments of the invention:*

| Function | %w/w | | | | | | | | | |
|---|---|---|---|---|---|---|---|---|---|---|
| | Ex-11 | Ex-12 | Ex-13 | Ex-14 | Ex-15 | Ex-16 | Ex-17 | Ex-18 | Ex-19 | Ex-20 |
| First Micronutrient (Boric Acid) | 17.03 | 17.03 | 17.03 | 17.03 | 17.03 | 17.03 | 17.03 | 17.03 | 17.03 | 17.03 |
| Second Micronutrient (Zinc Oxide) | 8.71 | 8.71 | 8.71 | 8.71 | 8.71 | 8.71 | 8.71 | 8.71 | 8.71 | 8.71 |
| Cooking waste oil | 10.00 | 10.00 | - | 8.00 | 10.00 | 10.00 | 10.00 | 10.00 | 10.00 | - |
| Tung oil | - | - | - | - | - | - | - | - | - | 5.00 |
| Molasses | 10.00 | 10.00 | 5.00 | 5.00 | - | - | 5.00 | 5.00 | 10.00 | 5.00 |
| Soy wax | 2.00 | - | - | - | - | - | - | - | - | - |
| Reis wax | - | 2.00 | - | - | - | - | - | - | - | - |
| Rosin resin | - | - | 4.00 | - | - | - | - | - | - | - |
| Carnauba wax | - | - | - | 2.00 | - | - | - | - | - | |
| Potato peel extract | - | - | - | - | 10.00 | - | 5.00 | - | - | |
| Eggshell powder | - | - | - | - | - | 10.00 | - | 5.00 | - | |
| Emulsifier 1 | 0.50 | 0.50 | 0.50 | 0.50 | - | - | - | - | - | 1.00 |
| Emulsifier 2 | 2.00 | 2.00 | 2.00 | 2.00 | 2.00 | 2.00 | 2.00 | 2.00 | 1.50 | 1.50 |
| Co-Emulsifier | 0.50 | 0.50 | 0.50 | 0.50 | 0.50 | 0.50 | 0.50 | 0.50 | 0.50 | 0.50 |
| Co-Solvent 1 | 2.50 | 2.50 | 1.50 | 2.50 | 2.50 | 2.50 | 2.50 | 2.50 | 2.50 | 2.50 |
| Co-Solvent 2 | - | - | 1.00 | - | - | - | - | - | - | - |
| Filler | 3.50 | 3.50 | 3.50 | 3.50 | 3.50 | 3.50 | 3.50 | 3.50 | 3.50 | 3.50 |
| Humectant | 1.50 | 1.50 | 1.50 | 1.50 | 1.50 | 1.50 | 1.50 | 1.50 | 1.50 | 1.50 |
| Silicon emulsion | 0.20 | 0.20 | 0.20 | 0.20 | - | - | 0.20 | 0.20 | 0.20 | 0.20 |
| Rheology Modifier | 0.10 | 0.10 | 0.10 | 0.10 | 0.25 | 0.25 | 0.10 | 0.10 | - | 0.10 |
| Rheology Modifier | | | - | - | - | - | - | - | 0.25 | - |
| Preservative | 0.15 | 0.15 | 0.15 | 0.15 | 0.15 | 0.15 | 0.15 | 0.15 | 0.15 | 0.15 |
| Solvent (water) | 41.81 | 41.81 | 46.31 | 54.31 | 43.86 | 43.86 | 43.81 | 43.81 | 44.16 | 53.31 |
| **Total** | 100 | 100 | 100 | 100 | 100 | 100 | 100 | 100 | 100 | 100 |

The inventive examples shown in Table 1 and Table 2 are not intended to limit the scope of the invention but represent preferred embodiments of the biodegradable coating formulation. The inventive examples report on the use of a suspo-emulsion comprising an oil phase dispersed in an aqueous phase, with solid micronutrient particles suspended in the suspo-emulsion. The suspo-emulsion includes a reclaimed material from a biological process in the oil phase or additionally in the aqueous phase. The examples provide a deeper insight into the chemical, rheological and mechanical properties of the formulation when in fluid form and when applied to a solid fertilizer and dried. Analyses carried out on the inventive examples show a high rheological stability, a stable pH, uniform distribution of all components, good binding properties with low dusting once applied as a fertilizer coating and a highly desirable release profile. The analyses show that a very high fertilizer performance can be achieved in a biodegradable and environmentally friendly coating formulation, despite natural fluctuations in the make-up of the reclaimed materials used. This is a surprising improvement over the state of the art.

The following table provides the comparative formulations of Ex-8 and Ex-10. These are single-phase formulations which do not form suspo-emulsions and are therefore provided to show the advantages of the inventive suspo-emulsions compared to water-based or oil-based formulations.

*Table 3: Comparative formulations Ex-8 and Ex-10:*

| Function | %w/w | |
|---|---|---|
| | **Ex-8** | **Ex-10** |
| First Micronutrient (Boric Acid) | 13.63 | - |
| Second Micronutrient (Zinc Oxide) | 6.97 | 62.30 |
| Co-Emulsifier | 0.50 | - |
| Co-Solvent | 1.50 | - |
| Filler | 5.00 | - |
| Humectant | 2.00 | - |
| Dispersant | - | 3.00 |
| Pigment | - | 0.50 |
| Rheology Modifier | 0.25 | - |
| Preservative | 0.10 | - |
| Solvent (rapeseed oil) | - | 34.20 |
| Solvent (water) | 70.06 | - |
| **Total** | 100 | 100 |

The inventive examples (all formulations except for Ex-8 and Ex-10) were prepared by first preparing an aqueous phase comprising water and, where applicable, the listed amounts of rheology modifier, hydrophilic surfactants, hydrophilic binder and humectant. The aqueous phase was heated to a temperature of 50 - 70 °C. After heating to the target temperature, micronutrients with at least partial solubility in water were added to the aqueous phase (for example micronutrients Boron (B), Fluorine (F) or Copper (Cu), Manganese (Mn)). The oil phase comprising the listed quantity of oil, hydrophobic surfactants and hydrophobic binder was prepared and heated until the oil phase was homogeneous. The homogeneous oil phase was then added to the aqueous phase under constant stirring. This resulted in an emulsification of the oil phase with the aqueous phase. After emulsification, the filler and insoluble or sparingly soluble micronutrient particles were added to the emulsion which was stirred until homogenous distribution. Where applicable, the preservative was then added at room temperature.

The comparative formulations (Ex-8 and Ex-10) comprising only a single phase were prepared using a simple mixing process. The properties of the inventive and comparative formulations were then studied using a variety of tests.

*pH Measurement:*

The pH of the formulations Ex-1 to Ex-10 was measured using the portable equipment MW102 Pro with pH/temperature meter, electrode MA911 B and temperature probe MA830R. This was used to record the pH of the formulations immediately after preparation. For the formulations Ex-1 - Ex-8 and Ex-10, a stable pH value could be recorded.

*Table 4: pH values of selected formulations*

| | **Ex-1** | **Ex-2** | **Ex-3** | **Ex-4** | **Ex-5** | **Ex-6** | **Ex-7** | **Ex-8** | **Ex-10** |
|---|---|---|---|---|---|---|---|---|---|
| **pH** | 5.25 | 6.25 | 7.18 | 5.52 | 5.44 | 5.56 | 5.85 | 7.45 | 8.35 |

The results show that the formulations of preferred embodiments of the invention were slightly more acidic than the comparative formulations, with some preferred embodiments being substantially neutral. Advantageously, none of the inventive coating formulations showed extreme pH values. All inventive formulations were compatible with most soils. For the inventive examples containing more water than oil, the pH was especially stable, indicating that the particles had a uniform distribution throughout the formulation and that the coating was not reactive.

*Optical Analysis of Coating Formulation:*

Selected formulations were analysed under a microscope (model Olympus CK2, INPUT: AC85-240V 50-60Hz, images focused by a camera with a 108 MP resolution). The selected formulations were diluted to a concentration of 10 % wherein 1 gram of formulation was diluted in 9 gram of demineralized water in a sample tube. For examples Ex-9 and E-10, dilution was carried out using a vegetable oil. Thereafter, 1 drop of the mixture was transferred over a glass lamina and covered with a glass slide. The lamina were placed in the hinge of the microscope and focused at increasing magnifications with photographs being taken.

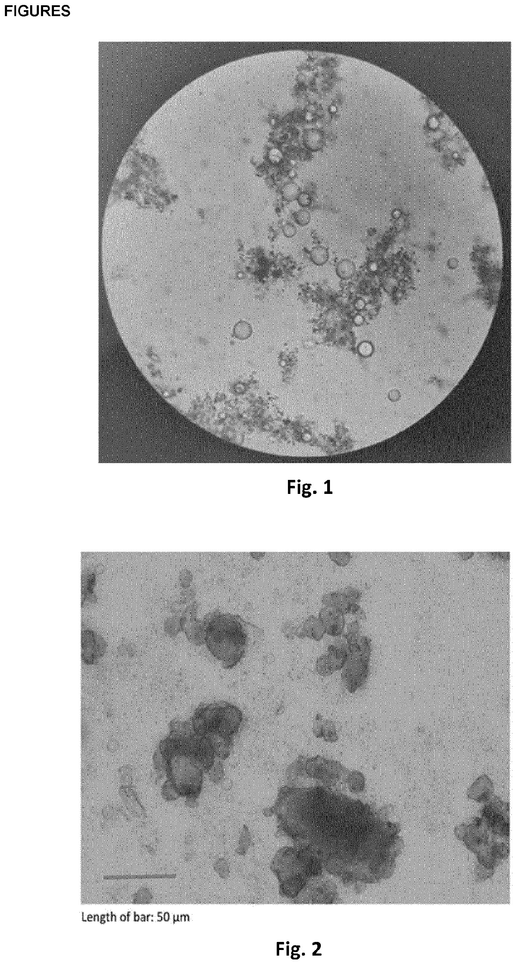

**Fig. 1** shows an optical microscopy image of a sample of the inventive formulation Ex-1 at a 40x magnification. **Fig. 2** shows the same sample magnified at 1000x. The images show oil droplets having substantially circular perimeters surrounding a lighter colored core which is substantially free of solids. These oil droplets comprise the used cooking oil which forms the oil phase. The oil droplets are dispersed throughout the sample. The solid particles of the suspo-emulsion are seen in the vicinity of the oil droplets without forming a pickering emulsion. These solid particles include the micronutrient particles a small part of boric acid and all the quantity of zinc oxide as well as the talcum filler. The solid particles can clearly be seen suspended in the aqueous rather than the oil phase. It is thought that this improves the bioavailability of the micronutrients to crops while the oil phase acts as a binder.

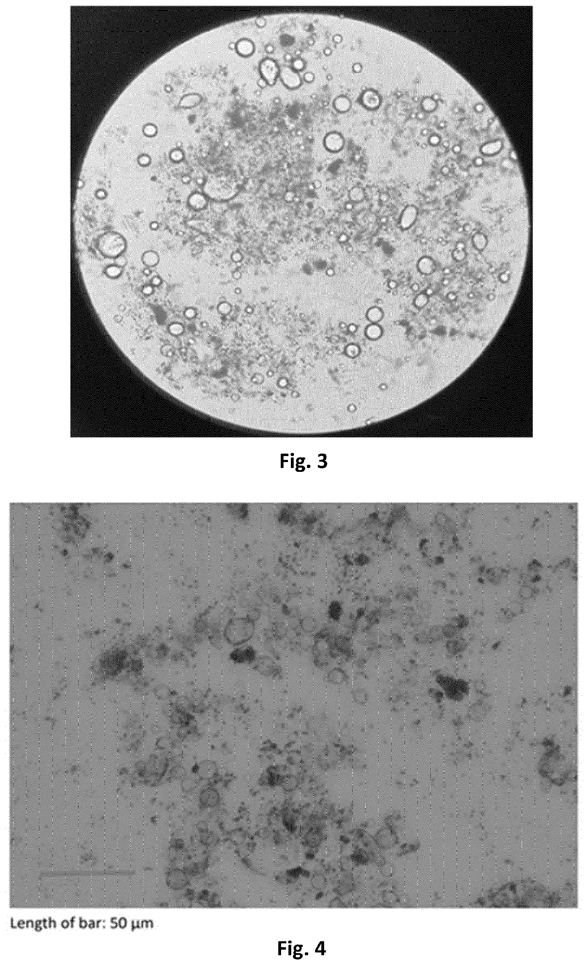

**Fig. 3** shows an optical microscopy image of a sample of another inventive formulation Ex-4 at 40x magnification. **Fig. 4** shows the same sample magnified at 1000x. The formulation Ex-4 contains the same type and amount if the micronutrient particles boric acid and zinc oxide as Ex-1. However, Ex-4 differs from Ex-1 in that the amount of used cooking oil present is raised from 8 to 10 w/w% and the formulation comprises 25 w/w % molasses and 0.2 w/w % of an anti-foaming emulsion. The optical microscopy images show oil drops as circular or elliptical areas with a lighter core and denser outline. These are much better dispersed than Ex-1 and comprise a large number of very small droplets which remain stable in their dispersion. It can be observed that the oil drops are free of any solids suspended therein. Instead, these are well distributed throughout the aqueous phase. Moreover, the suspo-emulsion is very stable and homogeneous, comprising oil droplets and suspended solids throughout.

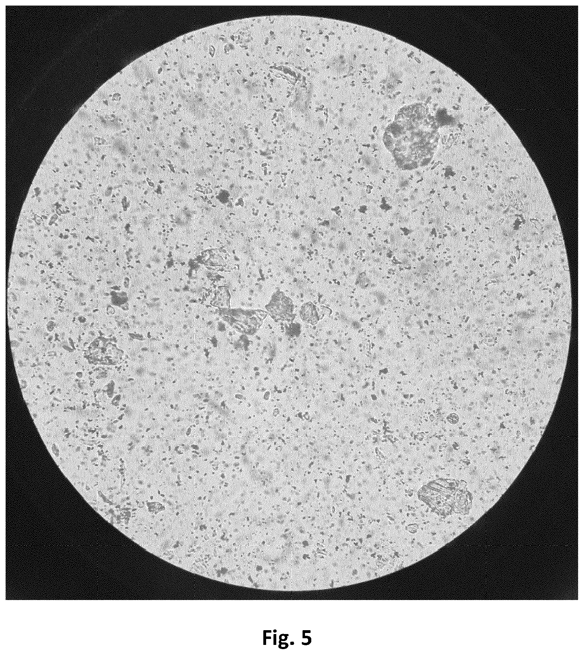

**Fig. 5** shows an optical microscopy image of the sample formulation Ex-8 which is provided only for comparison purposes. The different make-up of the formulation is clear when viewed under the microscope. No droplets can be observed, indicating that the formulation comprises only a single phase and is not an emulsion. Solid particles and large agglomerated clusters of powdered ingredients can be seen suspended in the water. This formulation would bind poorly to the surface of a solid fertilizer and would not overcome the difficulties faced by the state of the art in terms of weakening the solid fertilizer by application of water, caking and agglomeration of solid fertilizer granules.

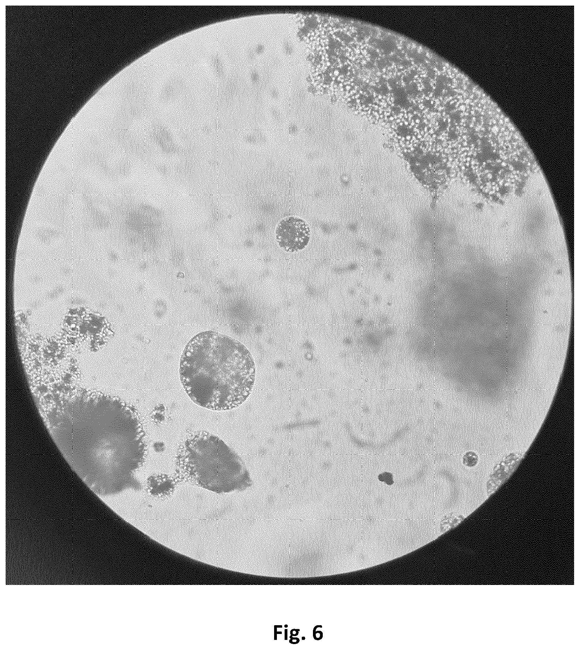

**Fig. 6** shows an optical microscopy image of the sample formulation Ex-9 which comprises the same types and amounts of the micronutrient particles boric acid and zinc oxide as Ex-1 and Ex-4. The formulation however comprises 50 w/w % used cooking oil which exceeds the proportion of water present in the formulation (18.56 w/w%). On the other hand, formulations Ex-1 and Ex-4 (as well as all other formulations according to a preferred embodiment of the invention which are studied herein) comprised more water than the used cooking oil. The effect of changing these relative proportions can be seen as a much stronger agglomeration of the solid particles and the water into large bubbles and large patches of different size floating in oil. The formulation was thus uneven and less stable than the other inventive examples, with phases eventually separating from one another. Due to the improved homogeneity and increased shelf life of formulations having more water than oil (e.g. Ex-1 and Ex-4), these formulations are preferred embodiments of the invention.

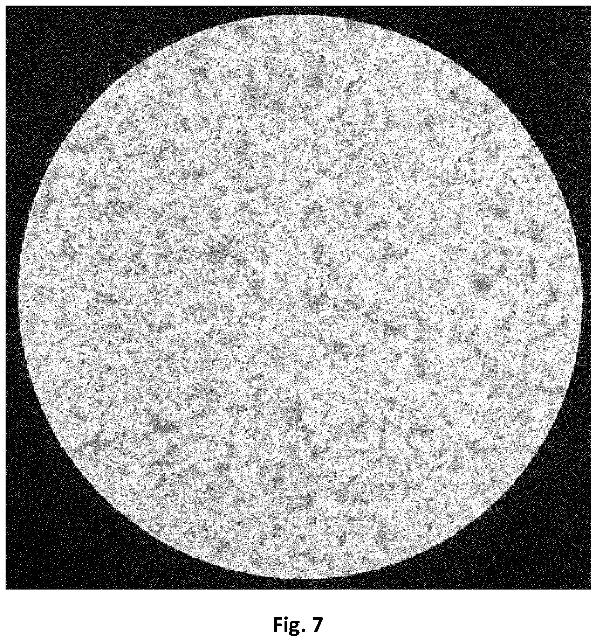

**Fig. 7** shows an optical microscopy image of the sample formulation Ex-10 which contains only zinc oxide as a micronutrient at a concentration of 62.3 w/w % with the majority of the remainder of the formulation being comprised of (native, unused) rapeseed oil. The image shows the solid particles and agglomerated clusters suspended in the oil. The formulation thus has only one phase and does not fall under the invention which concerns a suspo-emulsion. It is noted that this is a sample diluted down to 10 %, meaning that the original formulation was much more densely packed, presenting difficulties in pumping and evenly spreading the coating. Such a formulation would be very slow to biodegrade and would release excessively large amounts of zinc oxide into the soil, making it less environmentally friendly than the present invention. Additionally, it would not allow the coated fertilizer to be released steadily over two weeks or more.

*Particle Size Measurement:*

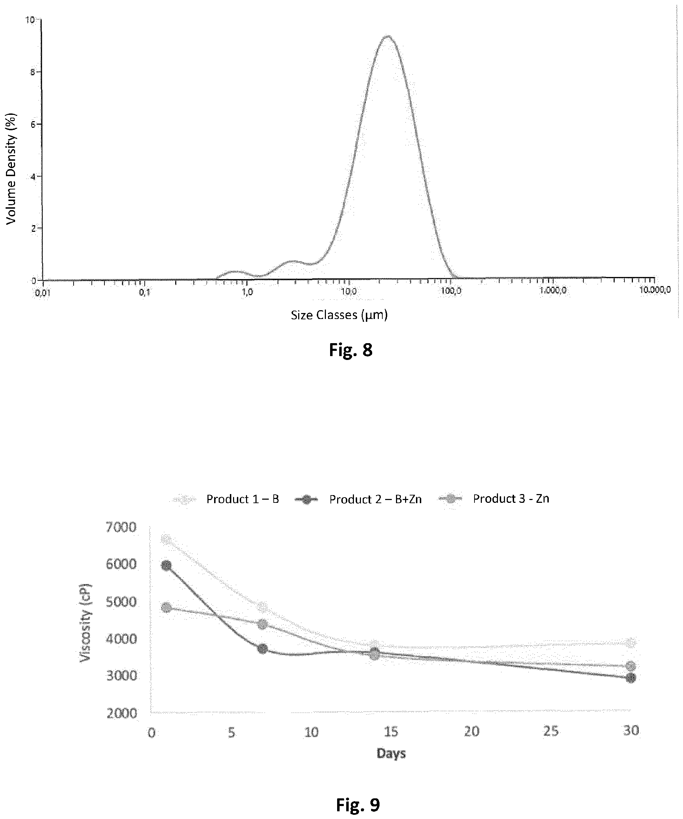

**Fig. 8** shows a particle size distribution of the inventive formulation Ex-1. The particle size distribution was measured using laser diffraction with the Mastersizer 3000 (Malvern Panalytical, Ltd, Malvern, Great Britain). The light scattering data, converted to particle size distribution were analyzed using a Mie-scattering model, using the non-spherical particle type and MgCCb as material (i.e., MgCCb settings for the refractive index (1.717) and adsorption index (0.01)). Prior to adding the sample to the instrument, the sample container was mixed well to ensure good sampling. A few drops of formulation in 400 mL of water were used for each measurement, the measurement time was set to 10 - 30 seconds. The lower obstruction limit was set to 0.5% and the upper limit to 5%, the air pressure was set to 1.5 bar. During the measurement the feed rate was constantly adjusted so that the obstruction was kept between 0.5 and 5%. All measurements were averaged and run at least five times.

The particle size distribution shows a main peak around 30 $\mu$m and a number of peaks at smaller size classes. The particle size distribution shows a long tail to the left, indicating a broad distribution. This allowed the particles to be sufficiently tightly packed when the coating formulation dried, such as to release the fertilizer in a controlled manner.

*Viscosity:*

The viscosities of selected formulations were tested immediately after preparation and at intervals after storage. The equipment SNB-1, NDJ-85 viscometer (Similar to Brookfield equipment) along with Spindle 3 with velocity of 6 rpm was used to measure the viscosity of the formulations, taking the average of two repeats. The average results recorded immediately after preparation of the samples are shown in Table 5 below. For all but Ex-9, a stable viscosity measurement could be taken.

*Table 5: Viscosity values of selected formulations*

|                | Ex-1 | Ex-2 | Ex-3 | Ex-4 | Ex-5 | Ex-6  | Ex-7  | Ex-8 | Ex-10     |
|----------------|------|------|------|------|------|-------|-------|------|-----------|
| **Viscosity (cP)** | 6231 | 7377 | 2580 | 7935 | 7748 | 12714 | 10780 | 2650 | Very high |

As shown by Table 5, the single-phase water-based formulation Ex-8 had a much lower viscosity while the single-phase oil-phase formulation Ex-10 had a much higher viscosity compared to preferred embodiments of the present invention. The invention could instead achieve moderately high viscosities which could be easily processed by pumps, brushes or spray equipment and could form a stable uniform layer on the surface of the fertilizer granules for the duration of a drying step.

**Fig. 9** shows the development of the viscosities of three further formulations over a period of 30 days. The three formulations are suspo-emulsions according to a preferred embodiment of the invention, with Product 1 comprising boric acid, Product 2 comprising boric acid and zinc oxide and Product 3 comprising zinc oxide as micronutrient particles. As illustrated by the graph, the viscosities of each sample stabilized over a period of 10 - 15 days when stored. The viscosities then remained substantially constant up to day 30 of storage. Further tests have shown that the viscosities remained substantially constant for much longer, including up to day 60 of storage at room temperature and 40°C. This is particularly advantageous as it indicates that the inventive coating formulation has a long shelf-life and that during storage, no unwanted phase separation, agglomeration, merging of droplets or settling of particles takes place. The formulation is thus viable for industrial use which may include transportation and storage. The formulation can be coated evenly over a fertilizer granule with a uniform distribution of micronutrients despite the storage time.

*Coating of Fertilizer Granules using the Inventive Coating Formulation:*

A single-step blending method using standard fertilizer coating equipment was used to coat fertilizer granules to produce a coated fertilizer according to a preferred embodiment of the invention. The coating was carried out at a temperature at room temperature with application of air to accelerate the drying process. The example formulations of the invention were found to present an optimal viscosity and were easy to apply on the fertilizer surface. The coating layer which resulted was of uniform thickness and consistency. For the lab scale tests, a food rotary drum machine was used to coat the granulate fertilizers and a hair dryer was used to dry the coating. This equipment could accept batches of up to 1 kg of fertilizer granules.

*SEM Analysis* of *Coated Fertilizer Granules:*

Samples of fertilizer granules coated with a formulation according to a preferred embodiment of the invention were randomly selected and placed on self-adhesive carbon carriers which were then inserted into the preparation system Emitech K 1250. These were sputtered with gold and channeled into the scanning electron microscope (Jeol JSM 6460 LV) at room temperature. A primary electron beam is generated in the SEM which is accelerated to 1 - 30 kV voltage. This primary electron beam is directed in an isometric pattern to the sample surface. A secondary electron signal created by the primary beam will be changed according to the state of the sample surface and the blade angle of the beam. Therefore, the image which is built up arises from light spots whose brightness is changed. Since the secondary electrons can be forced by magnetic lenses to follow a curved course, it is possible to make surface profiles visible which lie outside of the direct target line of the collector. A large depth of field and a three-dimensional effect can be achieved. The obtained image is stored electronically.

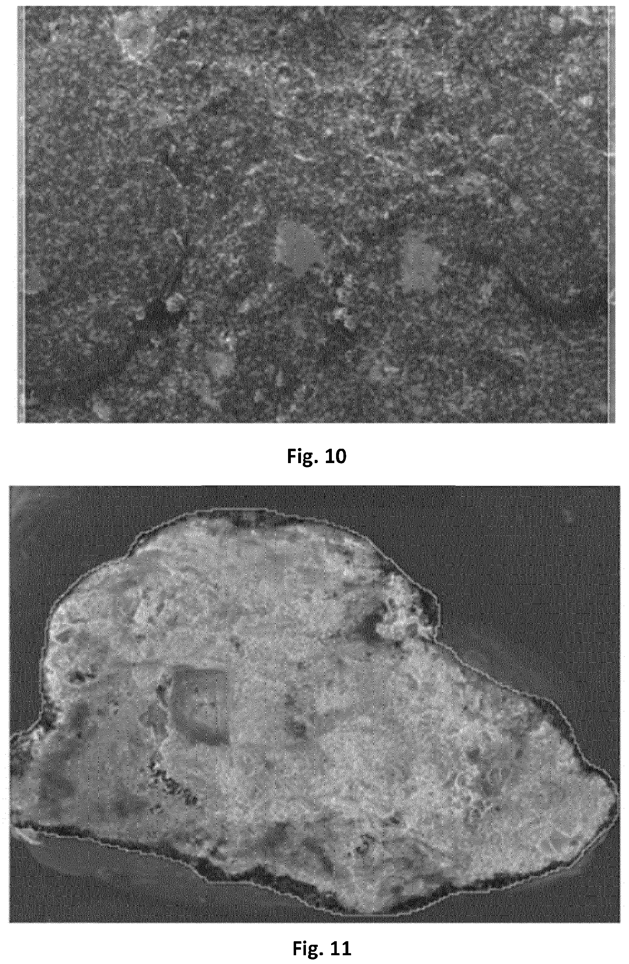

**Fig. 10** shows a scanning electron microscopy image of the surface of a coated fertilizer The high energy primary electron beam (impression depth max. 3 $\mu$m) led to the emission of an X-ray spectrum for each element present on the surface of the coated fertilizer. The peaks resulting from the spectrum could be matched to a respective element, such that the chemical make-up of the coated surface could be studied. Colors were assigned to the respective elements, wherein green (lighter shade) indicated the presence of Potassium and red (darker shade) indicated the presence of Zinc, which was a micronutrient provided in the coating formulation. The local positions of micronutrient particles containing Zinc (in particular ZnO) could be identified. As can be observed in **Fig. 10**, the coating envelopes the fertilizer granule in an almost fully closed manner. A consistent pattern of the red particles can be observed across the surface, indicating a uniform thin coating. The thickness of the coating was found to be approximately 10 - 40 $\mu$m. Needless to say, this thickness can be adjusted according to need, in particular according to the desired loading of micronutrients on the fertilizer surface.

**Fig. 11** shows a scanning electron microscopy image of a cross section through the coated fertilizer. The green (lighter shade) indicating the presence of Potassium can be seen to represent the bulk fertilizer material. The comparatively thin red (darker) border can be observed representing the coating. The coating can be seen to envelope the fertilizer granules from all directions, indicating that the coating and drying method could provide a full coating of the granules, which provides a high degree of control over the release of material from the bulk.

*Biodegradability:*

Selected coating formulations were tested for their biodegradability using the Oxi-Top measurement equipment mentioned above. For all tested samples, at least 70 w/w% of the coating formulation was biodegraded within two years. It is thought that the remaining material was mainly comprised of the micronutrient particles. As these would be taken up by crops in the field, the coating formulation would produce no non-biodegradable waste.

*Hardness of the Coated Fertilizer:*

The hardness was measured using a portable Heavy Duty Tablet Hardness Tester, Range 0 - 20Kg, commonly used for testing pharmaceutical tablets. A reading in Kg is recorded in a method which is applied to measure the breaking point of a fertilizer granule. The reading in Kg can be converted to a value in the SI unit of force (Newton) using the formula 9.807 Newton = 1 kilogram (at earth surface gravity). The majority of the granules were sub-divided into two different sizes, 3 - 4 and 4 - 5 mm for measuring the hardness. The hardness is recorded by placing the fertilizer granule between two jaws. One of the jaws then moves towards the granule pushing it against the fixed jaw until it breaks. The load at which the granule fails is then recorded.

Table 6 shows the measurements of the hardness of a coated fertilizer according to two preferred embodiments of the invention and the hardness of an uncoated fertilizer for comparison.

*Table 6: Hardness Values of Coated and Uncoated Fertilizer Granules:*

| Size | 3 - 4 mm | 4 - 5 mm |
|---|---|---|
| **Uncoated (Comparative Example)** | 10 - 13 Kg | 12 - 15 Kg |
| **Coated using Ex-4** | 10 - 13 Kg | 12 - 15 Kg |
| **Coated using Ex-7** | 10 - 13 Kg | 12 - 15 Kg |

The hardness values displayed in Table 6 show that the coatings according to preferred embodiments of the invention had no impact on the hardness of the granules. The softening effects observed when single-phase water-based coatings are applied to fertilizer granules are thus avoided. It is noted that the formulations Ex-4 and Ex-7 comprised molasses which had a surprisingly positive effect on the hardness of the coated fertilizer granules. This increases the shelf-life of the coated fertilizer granules and ensures that these would not be damaged during transportation. It additionally slows the release of fertilizer in the soil, such that this can be released steadily over weeks.

*Abrasion Resistance, Dustiness, Impact Resistance, Moisture Resistance:*

Selected samples of biodegradable coating formulations were also used to coat fertilizer granules which were then tested for further physical properties. A first group of coated fertilizer granules comprised only boron as a micronutrient in the coating, a second group of coated fertilizer granules comprised boron and zinc as micronutrients in the coating and a third group of coated fertilizer granules comprised only zinc as a micronutrient in the coating. The results are summarized in Table 7 below.

*Table 7 - Physical Properties of Coated Fertilizer Granules of the Invention:*

|  | Group I | Group II | Group III |
|---|---|---|---|
| **Micronutrient Load** | 0.1 - 0.5 % B | 0.1 - 0.4 % B, 0.23 - 0.90 % Zn | 0.5 - 2.1 % Zn |
| **Abrasion Resistance [% Degradation]** | <10 | <10 | <10 |
| **Dustiness [mg/kg of Product]** | <5 | <5 | <5 |
| **Impact Resistance [% Shattered Granules]** | <10 | <10 | <10 |
| **Critical Relative Humidity (CRH) [%]** | 55 - 60 | 55 - 60 | 55 - 60 |
| **Moisture Content [%]** | 1 - 3 | 1 - 3 | 1 - 3 |

*Fertilizer Release Rates and Profiles:*

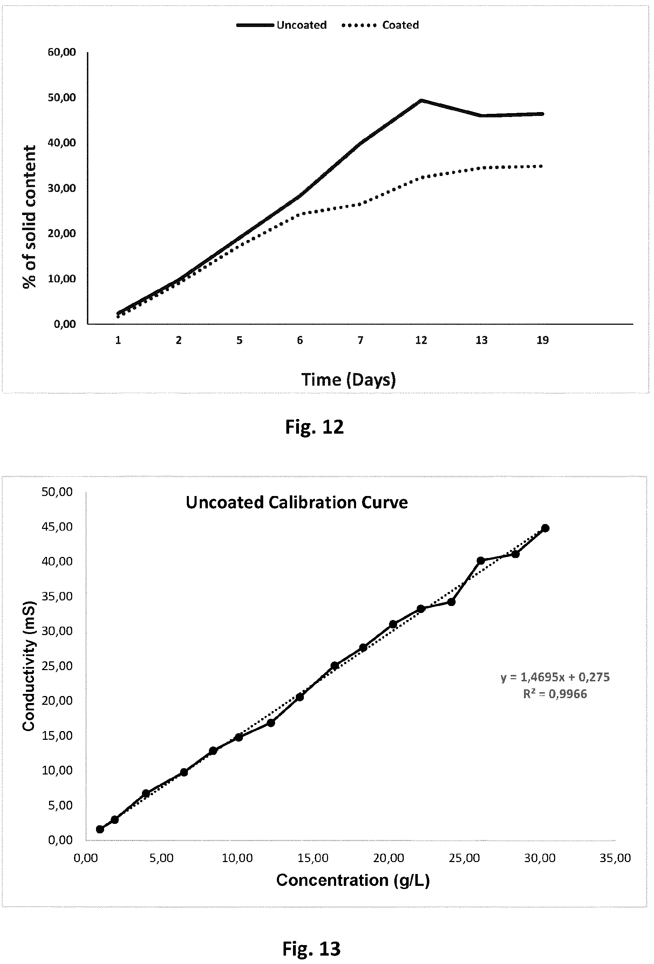

The inventors have developed a specialized an in-house/inexpensive method for accurately determining the amount of material released from the coated and uncoated fertilizer granules at intervals. This analysis may however be carried out by alternative known methods. Data collected via the in-house method is shown in Table 8 below and in **Fig. 12.**

*Table 8: Total solid content released from fertilizer granules as a percentage of the total weight of said granules over a period of 19 days:*

| Time (Days) | % Solid Content | |
|---|---|---|
|  | Uncoated | Coated |
| **1** | 2,40 | 1,65 |
| **2** | 9,74 | 9,05 |
| **5** | 19,00 | 17,26 |
| **6** | 28,29 | 24,30 |
| **7** | 39,88 | 26,48 |
| **12** | 49,39 | 32,38 |
| **13** | 45,95 | 34,50 |
| **19** | 46,40 | 34,87 |

**Fig. 12** shows the above data in graphic form. As shown in the graph, the uncoated fertilizer releases around 50 % of its material by day 12. The gradient of the release curve, which represents the rate of release, remains high throughout this period and only levels off at around day 13. This means that the release of fertilizer is generally uncontrolled and rapid, which results in higher fertilizer and micronutrient concentrations in the soil which causes a risk of disturbing the chemical balance of said soil and/or of groundwater.

On the other hand, the release of the coated fertilizer begins to level off at around day 6, where its gradient becomes much gentler. By day 12, only a third of the coated fertilizer has been released compared to half of the uncoated fertilizer. The release is therefore much more controlled, which can be attributed to the properties of the coating.

Fertilizer release rates may be measured and/or calculated according to known techniques. For completeness, release curves were also calculated using these known techniques. According to some methodologies known in the literature, it is possible to calculate the percentage of fertilizer release by conductivity measurements. (Eduardo et al. Rapid and Low-Cost Method for Evaluation of Nutrient Release from Controlled-Release Fertilizers Using Electrical Conductivity, Journal of Polymers and the Environment, 2018, 26, 4388-4395). The equipment used to measure conductivity is EC60 Conductivity Tester Kit (Conductivity/TDS/Salinity/Temp.), range of conductivity: 0.1 $\mu$S - 20.00 mS, resolution 0.1/1 $\mu$S, 0,01 mS and calibration 1 - 3 points. The equipment is calibrated before use. Thereafter, material conductivity was measured at a temperature around 20 - 25°C.

To understand the relationship between the conductivity and fertilizer concentration, a calibration curve with 16 different concentrations of fertilizer from 1g/L to 30g/L was prepared and the conductivity for each concentration was measured. The calibration curve resulted in the evaluation of the percentage of fertilizer released. To calculate the percentage of fertilizers released, a test granule (uncoated and coated) of fertilizer was weighed in a screw-cap bottle to which was transferred a fixed quantity of deionized water. Conductivity was measured for each sample after regular intervals of time. From the obtained value of conductivity, the concentration of fertilizer release was measured using the calibration plot. Afterwards the percentage of fertilizer released was calculated using the below equation.

$$\% \ of \ fertilizer \ released = \left(\frac{Concentration \ released}{Total \ concentration}\right) \times 100$$

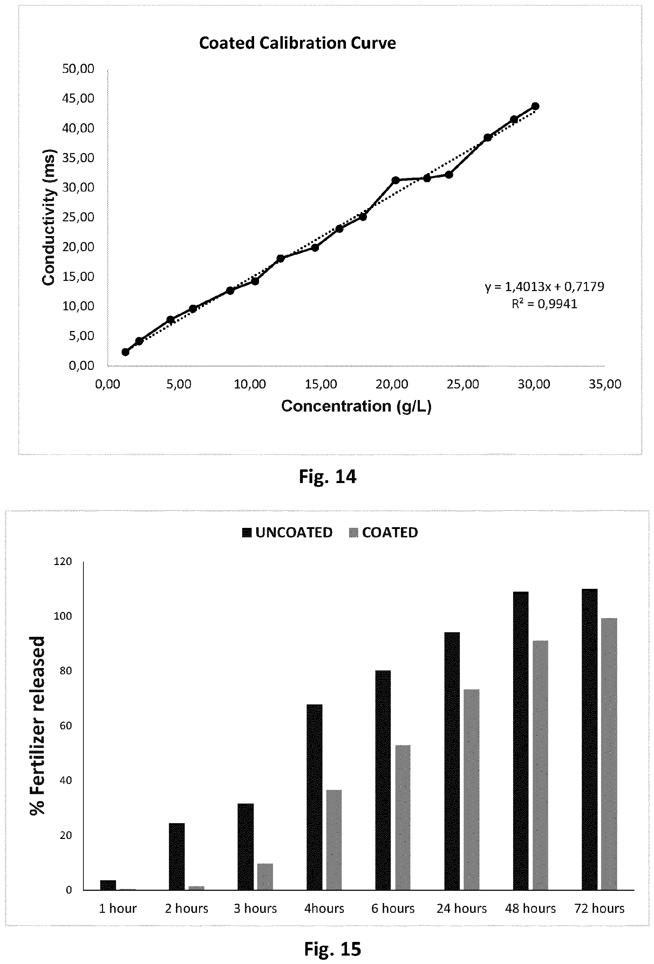

A calibration curve of concentration vs conductivity was plotted for uncoated fertilizer. This shows the relationship between the conductivity and concentration and was based on a linear regression, wherein $R^2$ is 0.9966 indicating that the linear regression is reliable. The calibration curve for the uncoated fertilizer is shown in **Fig. 13** and indicates a substantially linear relationship between concentration and conductivity. Therefore, for evaluating fertilizer release, conductivity was measured at regular pre-determined time intervals. By substituting the value of conductivity into the linear equation of the calibration curve, a concentration of released fertilizer was obtained. In a similar manner, a calibration curve was plotted for a coated fertilizer. This is shown in **Fig. 14** for a potash fertilizer coated with the coating formulation according to Ex-1.

Based on the two calibration curves, the percentage of coated and uncoated fertilizer released at timed intervals was calculated and plotted as shown in **Fig. 15.** This confirms that the fertilizer is released more slowly and in a more controlled manner when provided with a coating according to a preferred embodiment of the invention. This is especially the case in the initial 24 hours where the majority of the uncoated fertilizer is released but only 70 % of the coated fertilizer. A shock to the micro-ecosystem surrounding plant roots can be avoided. The release data presented here reflects extreme environment conditions where fertilizer is submerged into water rather than soil. However, in the real environment the fertilizer used in soil conditions with varying degrees of wetness will show an even more extended controlled release. This type of biodegradable coating is highly desirable.

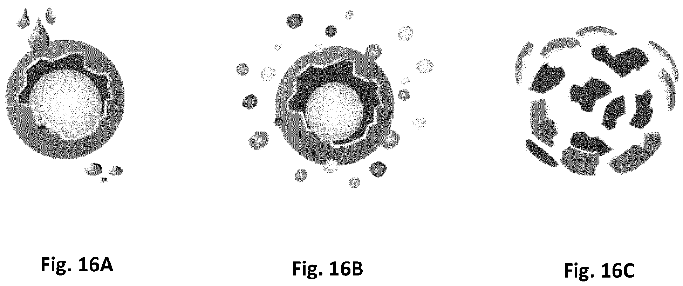

**Figs. 16A** - **16C** illustrate a mechanism of fertilizer release which is thought to underlie the functioning of the inventive coating and to explain the different release curves observed for coated and uncoated fertilizers. **Fig. 16A** shows the initial phase of soil-coating interaction which is herein referred to as the "attack phase": Here, the coated fertilizer in the field absorbs moisture. Due to the presence of a humectant in the coating, some of this moisture initially concentrates at the coating. Water however eventually punctures different locations of the surface of the coated fertilizer and penetrates to the bulk material. The coating however becomes moist and soft in such a manner that it still remains intact at several locations.

**Fig. 16B** represents a later stage of fertilizer release which is referred to herein as the breakdown phase. Moisture and temperature factors from the local environment trigger the fertilizers from the bulk or core to be released into the soil and/or moisture. At the same time, more significant breakdown of the coating occurs, causing micronutrients to be released into the soil.

**Fig. 16C** represents a final stage of fertilizer release which is referred to herein as the disintegration phase. Here, the fertilizer is fully released into the soil or surrounding environment. The coating is completely disintegrated and assimilated into the soil or surrounding environment. This is accelerated by microorganisms in the soil. As substantially 99% of the coating components are biodegradable, the micronutrient particles are released into the soil without any waste remaining. The whole three-phase process can be tuned by adjusting the coating, leading to a controlled and/or slow release of fertilizer.

## Claims

1. Biodegradable coating formulation for a fertilizer, said biodegradable coating formulation comprising an aqueous phase and an oil phase,

    the oil phase being dispersed in the aqueous phase and comprising a reclaimed material from a waste and/or side stream of a biologically based process,
    wherein micronutrient particles are suspended in the biodegradable coating formulation such as to form a suspo-emulsion.

2. Biodegradable coating formulation according to claim 1, wherein a proportion by weight of the aqueous phase exceeds a proportion by weight of the oil phase in the biodegradable coating formulation, wherein preferably the oil phase constitutes up to 45 w/w %, more preferably up to 35 w/w %, even more preferably up to 5 w/w %, of the biodegradable coating formulation.

3. Biodegradable coating formulation according to any of the previous claims, wherein the aqueous phase comprises an aqueous carrier in which the micronutrient particles are suspended and wherein preferably the proportion by weight of the aqueous carrier exceeds the proportion by weight of the oil phase in the biodegradable coating formulation, preferably the aqueous carrier constitutes more than 50 w/w %, more preferably more than 60 w/w %, even more preferably more than 70 w/w %, of the biodegradable coating formulation.

4. Biodegradable coating formulation according to any of the previous claims, wherein at least 90 w/w% of the micronutrient particles are suspended in the aqueous phase and/or at an interface between the aqueous phase and the oil phase.

5. Biodegradable coating formulation according to any of the previous claims, wherein micronutrient particles are present in the biodegradable coating formulation at a concentration of 0.1 - 35 w/w %, preferably between 0.1 - 20 w/w%, even more preferably between 0.1 - 18 w/w %.

6. Biodegradable coating formulation according to any of the previous claims, wherein the biologically based process is a microbial process, an agricultural process, an aquacultural process, a forestry process, an animal rearing process, an apicultural process, a plant-based oil extraction process, a food preparation process or a food manufacturing process, wherein the process is preferably a food manufacturing process.

7. Biodegradable coating formulation according to any of the previous claims, wherein the reclaimed material comprises any one or more of the following: used cooking oil, tung oil, linseed oil, teak oil, used cooking fat, potato peel extract, a natural wax, molasses, protamylasses, coffee waste, bone powder, eggshell, wherein the reclaimed material preferably comprises a combination of used cooking oil with molasses and/or protamylasses.

8. Biodegradable coating formulation according to any of the previous claims, wherein the reclaimed material is present in the biodegradable coating formulation at a weight percentage of 5 - 35 w/w%.

9. Biodegradable coating formulation according to any of the previous claims, wherein the micronutrient particles comprise at least a first micronutrient and a second micronutrient, the first and second micronutrient preferably belonging to the group comprising a source of: Boron, Zinc, Cobalt, Copper, Iron, Manganese, Molybdenum, Selenium, Nickel, Halogens and Alkali Metals, wherein a combination of Boron or Zinc with a second micronutrient is preferred.

10. Biodegradable coating formulation according to any of the previous claims, wherein a first micronutrient is present in the biodegradable coating formulation at a concentration of at least 1.5 %, preferably at least 2 %, the first micronutrient preferably being a boron source, and a second micronutrient is present in the biodegradable coating formulation at a concentration of at least 3 %, preferably at least 5 %, the second micronutrient preferably being a zinc source.

11. Biodegradable coating formulation according to any of the previous claims, wherein the suspo-emulsion has a substantially constant viscosity in a period between 15 - 60 days after storage at room temperature and at 40°C.

12. Biodegradable coating formulation according to any of the previous claims, wherein at least 70 % of the biodegradable coating formulation is biodegradable within two years, preferably within one year, more preferably within 6 months.

13. A method of producing a biodegradable coating formulation according to any of claims 1 - 13, the method comprising:

- providing an oil phase, comprising at least one reclaimed material from a waste and/or side stream of a biologically based process;
- providing water and/or one or more aqueous solutions to form an aqueous phase,
- adding the oil phase to the aqueous phase and dispersing the oil phase therein in order to form an emulsion;
- adding particles of a micronutrient to the aqueous phase before addition of the oil phase to the aqueous phase and/or adding particles of a micronutrient to the emulsion; and
- at least partially dissolving or suspending the particles of the micronutrient in the aqueous phase or the emulsion in order to form a suspo-emulsion.

14. A method of coating a granulate solid fertilizer material comprising applying the biodegradable coating formulation according to any of claims 1-13 onto a granulate solid fertilizer material.

**15.** Micronutrient coated fertilizer producible by applying a biodegradable coating formulation according to any of the previous claims 1 - 13 to a solid fertilizer.

FIGURES

**Fig. 1**

Length of bar: 50 μm

**Fig. 2**

**Fig. 3**

Length of bar: 50 µm

**Fig. 4**

Fig. 5

Fig. 6

**Fig. 7**

**Fig. 8**

**Fig. 9**

**Fig. 10**

**Fig. 11**

**Fig. 12**

**Fig. 13**

**Fig. 14**

**Fig. 15**

Fig. 16A

Fig. 16B

Fig. 16C

Europäisches
Patentamt

European
Patent Office

Office européen
des brevets

## EUROPEAN SEARCH REPORT

**Application Number**

EP 23 19 0431

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/348517 A1 (MOORE LUCAS R [US] ET AL) 3 November 2022 (2022-11-03)<br><br>* paragraph [0008] – paragraph [0009] *<br>* paragraph [0011] *<br>* paragraph [0016] *<br>* paragraph [0019] *<br>* paragraph [0021] – paragraph [0022] *<br>* claims * | 1-4,6,<br>8-10,<br>13-15 | INV.<br>C05D9/02<br>C05G5/27<br>C05G5/30 |
| X | US 2022/348518 A1 (MCLEROY ANNA [US] ET AL) 3 November 2022 (2022-11-03)<br><br>* paragraph [0013] – paragraph [0015] *<br>* paragraph [0020] – paragraph [0021] *<br>* paragraph [0024] – paragraph [0025] *<br>* claims 1-5,9,11-12 * | 1-6,<br>8-10,<br>13-15 | |
| A | CN 108 456 070 A (LYU LI) 28 August 2018 (2018-08-28)<br>* claims * | 1-15 | |
| A | WO 2018/169253 A1 (WANG YOUNGSUNG [KR]) 20 September 2018 (2018-09-20)<br>* paragraph [0027] * | 1-15 | |

| TECHNICAL FIELDS SEARCHED (IPC) |
|---|
| C05D |
| C05G |

The present search report has been drawn up for all claims

| Place of search | Date of completion of the search | Examiner |
|---|---|---|
| The Hague | 16 January 2024 | Rodriguez Fontao, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 19 0431

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2024

| Patent document cited in search report | | | Publication date | Patent family member(s) | | Publication date |
|---|---|---|---|---|---|---|
| US 2022348517 | A1 | | 03-11-2022 | AU 2022267295 | A1 | 09-11-2023 |
| | | | | US 2022348517 | A1 | 03-11-2022 |
| | | | | WO 2022232413 | A1 | 03-11-2022 |
| US 2022348518 | A1 | | 03-11-2022 | AU 2022264790 | A1 | 09-11-2023 |
| | | | | US 2022348518 | A1 | 03-11-2022 |
| | | | | WO 2022232421 | A1 | 03-11-2022 |
| CN 108456070 | A | | 28-08-2018 | NONE | | |
| WO 2018169253 | A1 | | 20-09-2018 | AU 2018235812 | A1 | 19-09-2019 |
| | | | | BR 112019018387 | A2 | 07-04-2020 |
| | | | | CA 3055544 | A1 | 20-09-2018 |
| | | | | CL 2019002482 | A1 | 13-12-2019 |
| | | | | CN 110475761 | A | 19-11-2019 |
| | | | | CO 2019009674 | A2 | 18-09-2019 |
| | | | | EC SP19065917 | A | 29-04-2021 |
| | | | | EP 3597623 | A1 | 22-01-2020 |
| | | | | JP 7012738 | B2 | 28-01-2022 |
| | | | | JP 2020510600 | A | 09-04-2020 |
| | | | | KR 20180105298 | A | 28-09-2018 |
| | | | | MA 49848 | A | 17-06-2020 |
| | | | | NZ 756901 | A | 29-07-2022 |
| | | | | PE 20191425 | A1 | 09-10-2019 |
| | | | | PH 12019501990 | A1 | 28-09-2020 |
| | | | | RU 2019126621 | A | 24-02-2021 |
| | | | | US 2020024209 | A1 | 23-01-2020 |
| | | | | WO 2018169253 | A1 | 20-09-2018 |
| | | | | ZA 201905675 | B | 27-05-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2958877 B1

**Non-patent literature cited in the description**

- **ANAND P. GUPTA**. Micronutrient status and fertilizer use scenario in India. *Journal of Trace Elements in Medicine and Biology*, 2005, vol. 18 (4), ISSN 0946-672X, 325-331
- **MIKULA et al.** Controlled release micronutrient fertilizers for precision agriculture - A review. *Science of The Total Environment*, 2020, vol. 712, ISSN 0048-9697, 136365
- Guideline for Testing Chemicals: Ready biodegradability. 1992
- Guideline of Chemical Substances Control Law: Biodegradability Test of Chemical Substances by Microorganisms. 2018
- **EDUARDO et al.** Rapid and Low-Cost Method for Evaluation of Nutrient Release from Controlled-Release Fertilizers Using Electrical Conductivity. *Journal of Polymers and the Environment*, 2018, vol. 26, 4388-4395